# EUROPEAN PATENT SPECIFICATION

(11) **EP 3 108 323 B1**
(45) Date of publication and mention of the grant of the patent: **26.02.2020**
(21) Application number: 15752538.7
(22) Date of filing: 21.01.2015
(51) Int. Cl.: G06F 1/06, G06F 13/00, G06F 13/16, G06F 13/40

(54) **APPARATUS, SYSTEM AND METHOD TO PROVIDE PLATFORM SUPPORT FOR MULTIPLE MEMORY TECHNOLOGIES**
VORRICHTUNG, SYSTEM UND VERFAHREN ZUR BEREITSTELLUNG EINER PLATTFORMUNTERSTÜTZUNG FÜR MEHRERE SPEICHERTECHNOLOGIEN
APPAREIL, SYSTÈME ET PROCÉDÉ POUR FOURNIR UN SUPPORT DE PLATE-FORME POUR DE MULTIPLES TECHNOLOGIES DE MÉMOIRE

(30) Priority: 19.02.2014 US 201461941687 P; 19.12.2014 US 201414578191
(43) Date of publication of application: 28.12.2016
(73) Proprietor: Intel Corporation, Santa Clara, CA 95054 (US)
(72) Inventor: MORAN, Brian P., Gold River, California 95670 (US); GANGULY, Konika, Portland, Oregon 97229 (US); LOOP, Rebecca Z., Hillsboro, Oregon 97229 (US); LI, Xiang, Portland, Oregon 97229 (US); COX, Christopher E., Placerville, California 95667 (US)
(74) Representative: Rummler, Felix
(86) International application number: PCT/US2015/012279
(87) International publication number: WO 2015/126559

(56) References cited:
- US-A1- 2002 144 074
- US-A1- 2008 259 553
- US-A1- 2010 042 778
- US-A1- 2013 054 872
- US-A1- 2013 054 949
- US-A1- 2013 083 585
- US-B2- 7 327 612

## Description

### BACKGROUND

### 1. Technical Field

Embodiments discussed herein variously relate to computer platform design. More particularly, certain embodiments include, but are not limited to, a platform to accommodate any of multiple different memory technologies.

### 2. Background Art

Improvements to memory systems have taken, and continue to take, many forms including faster dynamic random access memory (DRAM), higher double data rate (DDR) bus frequencies, larger capacity dual inline memory modules (DIMMs), more DIMMs per channel and other increased capabilities. DDR standards defined by the Joint Electron Device Engineering Council (JEDEC) Solid State Technology Association are some examples of memory technologies that variously implement memory functionality, and do so with different respective memory interface hardware.

Due to industry requirements regarding support for legacy memory systems, there is an increasing variety of memory interface hardware in the market as successive generations of memory device technologies are developed. To date, platform developers have relied upon the design of different printed circuit boards to support integration of different memory technologies each into a corresponding platform type.

Memory device testing and platform assembly are two areas of the industry that are impacted by the variety of previous, current and upcoming memory technologies to be tested and/or marketed. One common problem faced in these areas is the limited applicability of a given printed circuit board design to support only one corresponding memory technology.

US 2013/0054949 A1 discloses an apparatus including a first connector configured to fit into a first socket in a processing system, the first connector and first socket conforming to a first standard, a second socket configured to accept a memory module therein, the second socket and the memory module conforming to a second standard, a memory buffer module communicatively coupled to the first connector and the second socket, the memory buffer module configured to receive signals associated with the first standard from the first connector and output signals associated with the second standard to the second socket, and a virtualization module communicatively coupled to the memory buffer module, the first connector, and the second socket, the virtualization module configured to receive first initialization data associated with the second standard from the second socket and output second initialization data associated with the first standard to the processing system. US 2010/0042778 A1 discloses a memory system which includes a plurality of memory devices adapted to be coupled to an interface, an indicator for indicating a type of the plurality of memory devices, and an override circuit having a first terminal adapted to be coupled to the interface, a second terminal coupled to the plurality of the memory devices, and a control input for receiving a control signal. The override circuit is responsive to the control signal to alter an operation of the memory system.

### BRIEF DESCRIPTION OF THE DRAWINGS

The various embodiments of the present invention are illustrated by way of example, and not by way of limitation, in the figures of the accompanying drawings and in which:
FIG. 1 is a high-level block diagram illustrating elements of a system to support any of multiple memory technologies according to an embodiment.
FIG. 2 illustrates elements of a system to support any of multiple memory technologies according to an embodiment.
FIG. 3 is a flow diagram illustrating elements of a method to access a memory device according to an embodiment.
FIG. 4 is a flow diagram illustrating elements of a method to configure a platform to accommodate a memory technology according to an embodiment.
FIG. 5 is a set of tables each describing signals of a corresponding memory technology supported by a platform according to a respective embodiment.
FIG. 6 is a set of tables variously listing signal types and voltages each specified by a respective memory technology supported by a platform according to an embodiment.
FIGS. 7A-7C is a set of tables each describing a mapping of signals across different interface modes of a platform according to an embodiment.
FIGS. 8A-8D is a set of tables each illustrating elements of a pinout for accommodating a respective memory technology according to a corresponding embodiment.
FIGS. 9A-9C is a set of tables each illustrating elements of a pinout for accommodating a respective memory technology according to a corresponding embodiment.
FIG. 10 is a high-level block diagram illustrating elements of a computer system to support any of multiple memory technologies according to an embodiment.
FIG. 11 is a high-level block diagram illustrating elements of a mobile device to support any of multiple memory technologies according to an embodiment.

### DETAILED DESCRIPTION

Embodiments discussed herein variously provide techniques and/or mechanisms for a platform to support operation with a memory device that is based on any of multiple different memory technologies. In an embodiment, a printed circuit board (PCB) such as a motherboard has disposed therein and/or thereon circuitry to exchange one or more signals indicating connectivity of the PCB to a memory device via a hardware interface that is disposed in or on the PCB. Such circuitry may be configured to exchange one or more signals identifying a memory type of the memory device. In some embodiments, a voltage regulator (VR) is coupled to the PCB, wherein multiple programmable modes of the VR each correspond to a different respective one of the multiple memory technologies. Based on a memory type of the memory device - e.g., a particular memory technology on which the memory device is based - a mode of the VR may be programmed to provide to the hardware interface one or more voltages specified by the corresponding memory technology. The memory device may exchange signals with a processor device coupled to the PCB via another hardware interface disposed in or on the PCB. The interconnect may include signal lines configured to be able to accommodate any of multiple interface modes of the processor device - e.g., where the multiple interface modes each correspond to a different respective one of the multiple memory technologies.

As used herein, "hardware interface" refers to a set of input and/or output (I/O) contacts - such as pins, pads, balls or other conductive structures - by which one device may be coupled to another device. For example, a hardware interface may be disposed on a PCB to allow for coupling of a packaged integrated circuit (IC) device, a memory module and/or other device to the PCB. A hardware interface may include, for example, a mechanical connector capable of receiving a pluggable memory module. Alternatively, a hardware interface may include an array of pads available to be soldered to a ball grid array (BGA) of a device. A device to couple to a PCB via a hardware interface may comprise a processor (e.g., a central processing unit) including one or more processor cores. Alternatively, such a device may comprise a DIMM or other memory module including one or more packaged memory devices.

Certain illustrative embodiments are discussed herein with respect to various memory standards such as dual data rate (DDR) standards. Examples of such standards include, but are not limited to, the DDR3 Synchronous Dynamic Random-Access Memory (SDRAM) standard JESD79-3, published June 2007 by the JEDEC Solid State Technology Association, the DDR3L SDRAM standard JESD79-3-1, published July 26, 2010 by the JEDEC Solid State Technology Association and the DDR4 SDRAM standard JESD79-4, published September 25, 2012 by the JEDEC Solid State Technology Association. Other examples include the LPDDR3 JESD209-3 LPDDR3 Low Power Memory Device Standard, published May 17, 2012 by the JEDEC Solid State Technology Association, the LPDDR4 Low Power Memory Device Standard JESD209-4, published August 2014 by the JEDEC Solid State Technology Association and the Graphics Double Data Rate (GDDR5) Synchronous Graphics Random-Access Memory (SGRAM) Standard JESD212B.01, published December 2013 by the JEDEC Solid State Technology Association. However, such discussion may be extended to additionally or alternatively apply to any of a variety of DDR and/or other memory standards. Unless otherwise indicated, "memory technology" and "memory type" are variously used herein to refer to particular set of signals and/or one or more voltages that are included in or otherwise used by a memory device. Such a set of signals and one or more voltages may be based on - e.g. specified by or otherwise compatible with - requirements of a particular memory standard, for example.

Certain embodiments discussed herein variously relate to a platform supporting operation of a processor device that is configurable to support multiple different modes each corresponding to a different respective memory technology. Such modes may each include a different respective pinout being configured for the processor device. Unless otherwise indicated, "interface mode" herein refers to a mode of a device - e.g., a processor device - that provides a particular pinout of the device. One interface mode of a device may be distinguished from one or more other interface modes of the device that each provide a different respective pinout of the device. At different times, a processor device may operate in different ones of the multiple interface modes - e.g., while the processor remains coupled to a PCB via the same hardware interface. A transition of a device to an interface mode - e.g., including a transition between different interface modes - is referred to herein as multiplexing (or MUXing) to the interface mode.

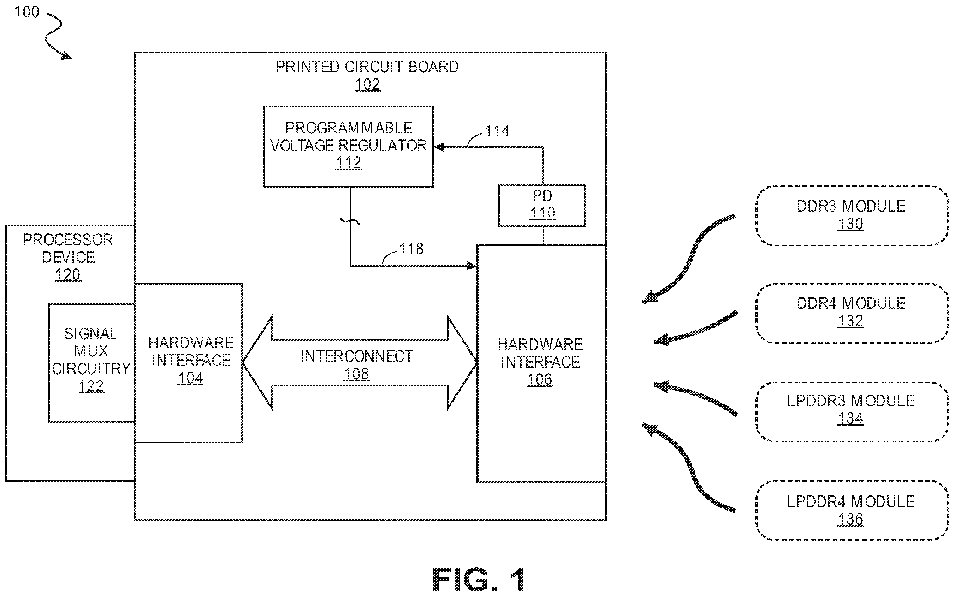

FIG. 1 illustrates elements of a system 100 according to an embodiment to facilitate operation of a processor with any of multiple memory devices each corresponding to a different respective set of signal - e.g., the sets of signals each based on a different respective memory standard. The technologies described herein may be implemented in one or more electronic devices. Non-limiting examples of electronic devices that may utilize the technologies described herein include any kind of mobile device and/or stationary device, such as cameras, cell phones, computer terminals, desktop computers, electronic readers, facsimile machines, kiosks, netbook computers, notebook computers, internet devices, payment terminals, personal digital assistants, media players and/or recorders, servers (e.g., blade server, rack mount server, combinations thereof, etc.), set-top boxes, smart phones, tablet personal computers, ultra-mobile personal computers, wired telephones, combinations thereof, and the like. Such devices may be portable or stationary. In some embodiments the technologies described herein may be employed in a desktop computer, laptop computer, smart phone, tablet computer, netbook computer, notebook computer, personal digital assistant, server, combinations thereof, and the like. More generally, the technologies described herein may be employed in any electronic device to which one or both of a processor device and memory device may be coupled and/or installed.

In an embodiment, system 100 includes printed circuit board (PCB) 102 and components variously disposed therein or thereon, where such components are to facilitate communication between a processor device 120 and a memory device that are each to couple to PCB 102. Such components are represented as including the illustrative hardware (HW) interface 104, HW interface 106, interconnect 108, presence detector PD 110 and programmable voltage regulator (VR) 112. However, system 100 may include any of a variety of additional or alternative components to provide functionality such as that described herein. System 100 is shown as including PCB 102 coupled to processor device 120 via HW interface 104, where PCB 102 is available to be further coupled to any of multiple different memory devices via HW interface 106. However, some embodiments of system 100 merely include PCB 102 and components disposed therein and/or thereon - i.e., where the embodiment is available to be coupled to, but does not include, processor device 120. Examples of the different memory devices include memory modules each based on - e.g., conforming to or at least compatible in one or more respects with requirements of - a different respective memory standard such as the illustrative DDR3 module 130, DDR4 module 132, LPDDR3 module 134 and LPDDR4 module 136. However, system 100 may support fewer, more and/or different memory technologies, according to different embodiments.

Processor device may include one or more processor cores and, in an embodiment, memory controller logic to access a memory device on behalf of such one or more processor cores. Processor device 120 is one example of a pinout-configurable device - e.g., where processor device 120 includes signal MUX circuitry 122 to provide any of multiple different possible pinouts at the connection to HW interface 104. As used herein, "pinout" refers to a mapping of I/O contacts (e.g., pins, pads, balls or the like) each to a respective signal or voltage of an interface. Signal MUX circuitry 122 may be configured at different times to any of different interface modes each corresponding to a different respective memory technology, where an interface mode provides a respective pinout to accommodate the corresponding memory technology. Some or all of signal MUX circuitry 122 may be adapted from conventional mechanisms to provide a configurable pinout. The particular details of such conventional mechanisms, which are not limiting on certain embodiments, are not detailed herein to avoid obscuring features of such embodiments.

To date, platform designers have relied upon one PCB design (or one class of PCB designs) for a given pinout-configurable processor device to operate with one memory technology, and a different PCB design (or class of PCB designs) for that pinout-configurable processor device to operate with a memory device of a different memory technology. Certain embodiments are a result of a realization that PCB design may be adapted to build on the capabilities of a pinout-configurable processor device, allowing for the device's operation - as part of one common platform - with any of multiple different possible memory technologies.

In an embodiment, printed circuit board 102 is to serve as a motherboard for a platform - e.g., where system 100 is the platform or a component of the platform. Hardware interfaces 104,106 may each include a respective plurality of I/O contacts - e.g., where interconnect 108 includes signal lines each coupling a respective I/O contact of HW interface 104 to a respective I/O contact of HW interface 106. By way of illustration and not limitation, such signal lines of interconnect 108 may variously support the communication of data signals, address signals, clock signals, on-die termination signals, clock enable signals, chip select signals and/or any of various other signals variously defined each by a respective memory standard.

Processor device 120 may comprise a packaged device including one or more processor cores to operate as a central processing unit (CPU) or other processor for system 100 - e.g., including processor device 120 executing a host operating system (OS), a Basic Input/Output System (BIOS) and/or one or more other software processes. Although certain embodiments are not limited in this regard, processor device 120 may include or otherwise have access to state machine logic (e.g., comprising hardware, firmware and/or executing software) to identify a particular memory technology type of a memory device coupled to HW interface 106. In some embodiments, system 100 is to couple to, but may not include, either or both of processor device 120 and a memory device to couple to HW interface 106.

System 100 may include presence detector circuitry PD 110 disposed in or on PCB 102, where circuitry of PD 110 is to detect connectivity of a memory device to HW interface 106. Such a memory device may include a memory module - e.g., a DIMM - comprising one or more packaged memory devices based on a particular memory standard. Although certain embodiments are not limited in this regard, detection of such connectivity may include PD 110 performing one or more operations adapted from conventional presence detection techniques such as those based on a serial presence detect (SPD) standard. One example of such a standard is the SPD standard for DDR3 SDRAM Modules (Release 6), SPD4_01_02_11: SPD Annex K, of the JEDEC Solid State Technology Association, published February, 2014. The particulars of such conventional presence detect techniques are not detailed herein, and are not limiting on certain embodiments.

PD 110 may generate a signal 114 indicating the detected connectivity of a memory device to PCB 102 via HW interface 106. Signal 114 may specify a particular memory type of the memory device or, alternatively, may merely signal connectivity generically. Signal 114 may cause one or more other components of system 100 to determine and/or operate based on a specific one of multiple possible memory types of the memory device.

For example, a programmable voltage regulator (VR) 112 disposed in or on PCB 102 may be programmable to provide to HW interface 106 any of multiple sets of one or more signals that each correspond to a different respective memory technology. Based on signal 114, programmable VR 112 may be programmed to provide a particular set of one or more voltages - as represented by the illustrative one or more voltages 118 - that correspond to the memory type (in this case, memory technology) of the memory device coupled to HW interface 106. The one or more voltages 118 may be variously provided directly or indirectly by VR 112 each to a respective I/O contact of hardware interface 106 - e.g., where such I/O contacts are to be distinguished, for example, from I/O contacts of HW interface 106 that are coupled to interconnect 108. In another embodiment, the one or more voltages 118 may be provided by VR 112 to HW interface 106 via processor 120 and interconnect 108 and/or one or more other intermediary components of system 100. One or more voltages 118 may include, but are not limited to, a reference (e.g., ground) voltage, a supply (e.g., VDD) voltage and/or any of various other voltages.

Signal 114 is shown as being provided directly to programmable VR 112. However, in an alternate embodiment, signal 114 may be additionally or alternatively provided to other logic of 100 that is to identify a memory technology of the memory device coupled to HW interface 106. For example, signal 114 may instead be communicated to state machine logic of processor device 120, where in response to signal 114, such state machine logic may identify a memory type of the memory device. In turn, such state machine logic may communicate the memory type to facilitate configuration of a corresponding interface mode of signal MUX circuitry 122 and/or to facilitate programming of programmable VR 112.

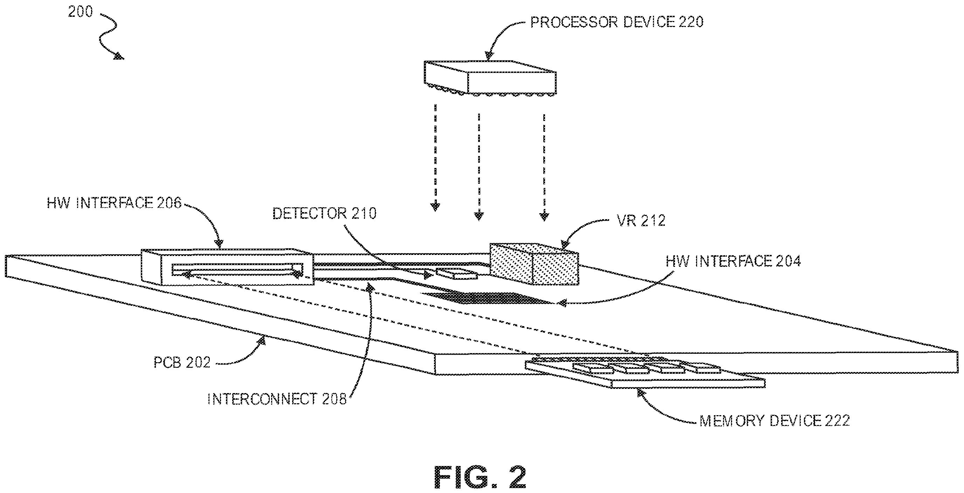

Referring now to FIG. 2, an assembly view of a system 200 according to one illustrative embodiment is shown. System 200 may include some or all of the features of system 100, for example. In an embodiment, system 200 includes a PCB 202 and components variously disposed therein or thereon to facilitate communication between a processor device 220 and a memory device 22 that are each to couple to PCB 202. Such components are represented as including the illustrative HW interfaces 204, 206, interconnect 208, detector 210 and VR 212.

In FIG. 2, PCB 202 is shown as being ready to be coupled to processor device 220 via HW interface 204, and further ready to be coupled to memory device 222 via HW interface 206. Some embodiments of system 200 merely include PCB 202 and components disposed therein and/or thereon - i.e., where the embodiment is available to be coupled to, but does not include, processor device 220 or memory device 222.

In the illustrative embodiment of system 200, HW interface 204 is an array of I/O pads to be variously soldered each to a corresponding ball of a ball grid array of processor device 220. By contrast, HW interface 206 may be a mechanical connector including I/O contacts to plug or otherwise connect with respective I/O contacts of memory device 222. By way of illustration and not limitation, HW interface 206 may comprise a memory module connector such as one that is compatible with a small outline DIMM (SO-DIMM) connector or any of various other conventional memory module connector types. HW interface 206 may facilitate a user switching or otherwise choosing between memory device 222 and at least one alternative memory device - e.g., where the two memory devices are based on different memory standards.

PCB 202 may facilitate communication by processor device 220 and memory device 222 as well as, at another time, an alternative memory device (not shown) that may be coupled to PCB 202 via HW interface 206. Interconnect 208 may include a plurality of signal lines each coupling an I/O contact of HW interface 204 to a respective I/O contact of HW interface 206. A total number of such a plurality of signal lines may correspond to a superset of multiple sets of signal lines variously defined each by a respective memory standard. By way of illustration and not limitation, the multiple sets of signal lines may include a first set including signals defined by a first memory standard and a second set including signals defined by a second memory standard. In such an embodiment, the plurality of signal lines of interconnect 208 may correspond to a superset due at least in part to the total number of the plurality of signal lines being greater than a total number of first set, and less than a total number of signals of the first set and the second set.

As discussed herein, detector 210 may detect connectivity of memory device 222 to HW interface 206 and exchange via PCB 202 a signal indicating such connectivity. An indication of such connectivity may be communicated directly or indirectly to one or more components - e.g., including HW interface 204 and/or VR 212 - that are to determine a memory type of memory device 222 and/or be configured based on such a memory type. For example, processor device 220 may determine the memory type and configure a particular interface mode, of multiple possible interface modes of processor device 220, for an exchange of signals via HW interface 204 that is compatible with the memory type. The multiple possible interface modes of processor device 220 may each correspond to a different respective memory technology, where each interface mode is to provide a different respective pinout to accommodate the corresponding memory technology. Alternatively or in addition, VR 212 may configure a particular VR mode, of multiple possible VR modes of VR 212, for the providing of one or more voltages to memory device 222 via HW interface 204. The multiple possible VR modes may each correspond to a different respective memory device type, where each VR mode is to provide respective one or more voltages specified by the corresponding memory technology.

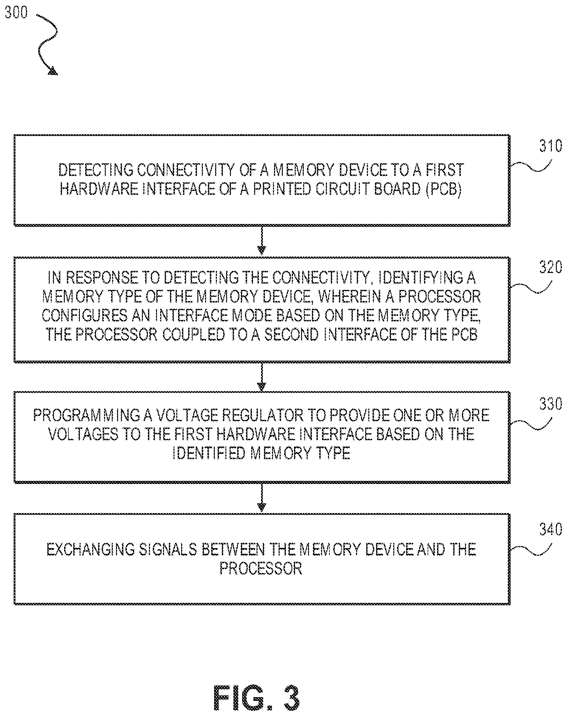

FIG. 3 illustrates elements of a method 300 for exchanging communications between a processor and a memory device according to an embodiment. Method 300 may be performed by a platform, system or other hardware including some or all of the features of system 100, for example. In an embodiment, method 300 includes, at 310, detecting connectivity of a memory device to a first hardware interface disposed in or on a printed circuit board. The detecting at 310 may be performed with detector logic disposed in or on the PCB, wherein the detector logic generates and send to a processor device a signal indicating the connectivity. Such detector logic may conform to or otherwise be based on a serial presence detect standard, for example.

In response to detecting at 310, method 300 may include, at 320, identifying a memory type of the memory device. The identifying at 320 may include identifying a memory standard on which the memory device is based and/or identifying a set of signals (e.g., a pinout) included in or otherwise corresponding to the memory device. Based on the memory type, a processor device may configure a first interface mode of multiple interface modes of the processor device. For example, the processor may be coupled to the PCB via a second hardware interface disposed in or on the PCB. State machine logic included in or otherwise accessible to the processor device may identify the memory type of the memory device, from among multiple possible memory types, based on one or more exchanges with detector logic on the PCB and/or with the memory device itself. Such state machine logic may comprise, for example, state machine circuitry of the processor device or a Basic Input/Output System (BIOS) process executed by the processor device. The multiple interface modes of the processor device may each correspond to a different respective one of multiple sets of signals. Such sets of signals may include one or more sets each specified by a different respective memory standard.

Method 300 may further comprise, at 330, providing one or more voltages to the first interface based on the identified memory type. For example, the VR may generate or receive an indication of the memory type and, in response, program a first voltage regulator (VR) mode of multiple VR modes of a VR. The multiple VR modes may each correspond to a different respective one of multiple memory device types. The multiple memory types may each correspond to a respective memory standard - e.g., where one or more VR modes are each to provide respective one or more voltages specified by a corresponding memory standard. The VR may provide the one or more voltages at 330 based on the programmed first VR mode.

During operation of the memory device based on the one or more voltages, method 300 may, at 340, exchange signals between the memory device and the processor device. For example, such signals may be exchanged via x signal lines of an interconnect disposed in or on the PCB, wherein x is an integer equal to a total number of signals of a superset of sets of signals each corresponding to a different respective one of multiple memory types.

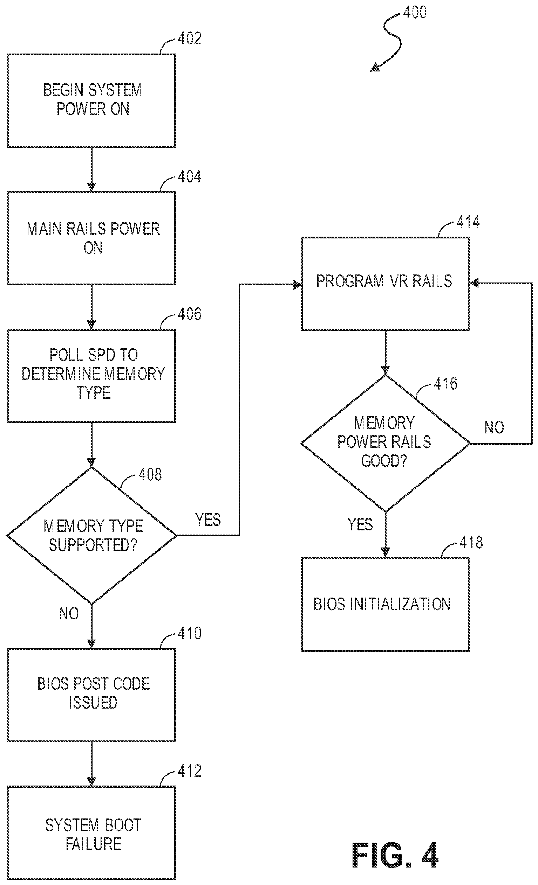

FIG. 4 illustrates elements of a method 400 for identifying a memory type of a memory device according to an embodiment. Method 400 may be performed by a component of system 100 or 200 to determine a pinout to be configured for communication with the memory device. For example, method 400 may be performed by a BIOS process of processor device 120 or processor device 200.

At 402, method 400 may begin operations to power on a system such as one of systems 100, 200. During or after such power on operations, one or more main rails of a PCB may be powered on - e.g., to power detector logic that is to detect connectivity of a memory device via a HW interface disposed in or on the PCB. By way of illustration and not limitation, at 406, serial presence detect (SPD) logic on the PCB may be polled by state machine logic to determine a memory type of any memory device coupled to the HW interface. After the polling at 406 indicates the presence of a memory device is detected, method 400 may determine, at 408, whether a processor coupled to the PCB supports a memory type of the memory device.

Where the memory type is not supported, method 400 may include an error message being generated, such as the illustrative BIOS power on, self-test (POST) code issued at 410, and a system boot failure at 412. However, where it is determined at 408 that the determined memory type is supported, method 400 may, at 414, program voltage regulator rails to provide respective voltage levels specified by a memory standard corresponding to the memory type. The voltage levels may be variously provided from the voltage regulator, via the PCB and the HW interface, to the memory device for operation of same.

Certain embodiments are not limited to the serial presence detection logic residing on the PCB to detect for connectivity of a memory device. For example, some embodiments may provide for a BIOS process, executing with the processor device, to provide a presence detection functionality. In such an embodiment, method 400 may include one or more additional operations (not shown) to determine which presence detection mechanism is available for use. The processor device may perform such operations to determine whether SPD logic on the PCB is accessible or whether, for example, a virtual SPD process of the BIOS is to be used instead. Such determining may be performed prior to the polling at 406 to determine a target of such polling.

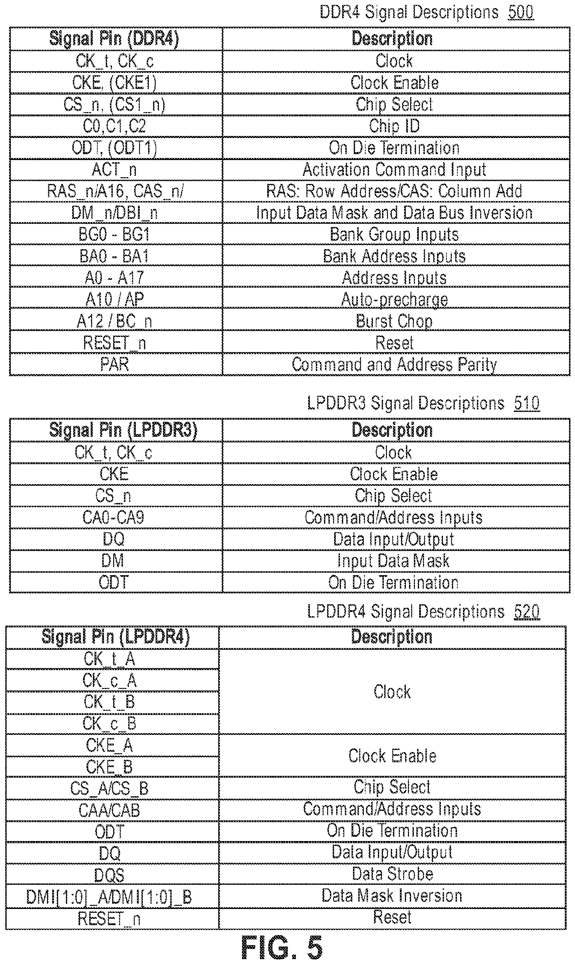

Referring now to FIG. 5, the various tables shown each list and describe at least some signals identified by a corresponding memory standard. More particularly, table 500 describes signal to be exchanged by a memory device that is based on a DDR4 standard, table 510 describes signal to be exchanged by a memory device that is based on a LPDDR3 standard, and table 520 describes signal to be exchanged by a memory device that is based on a LPDDR4 standard. The particular details of such memory standards, and signals thereof, are not described herein to avoid obscuring features of certain embodiments.

As described in more detail herein, an interconnect such as one of interconnects 108, 208 may include at least some plurality of signal lines to exchange signals between hardware interfaces disposed on a PCB. The plurality of signal lines may serve as a superset that can accommodate any of multiple sets of signals each specified by a different respective memory standard. Tables 500, 510, 520 represent one example of such different memory standards, and respective signals thereof. However, the interconnect may support fewer, additional and/or other memory standards. Additionally or alternatively, the superset may support fewer, additional and/or other signals specified by some or all such memory standards.

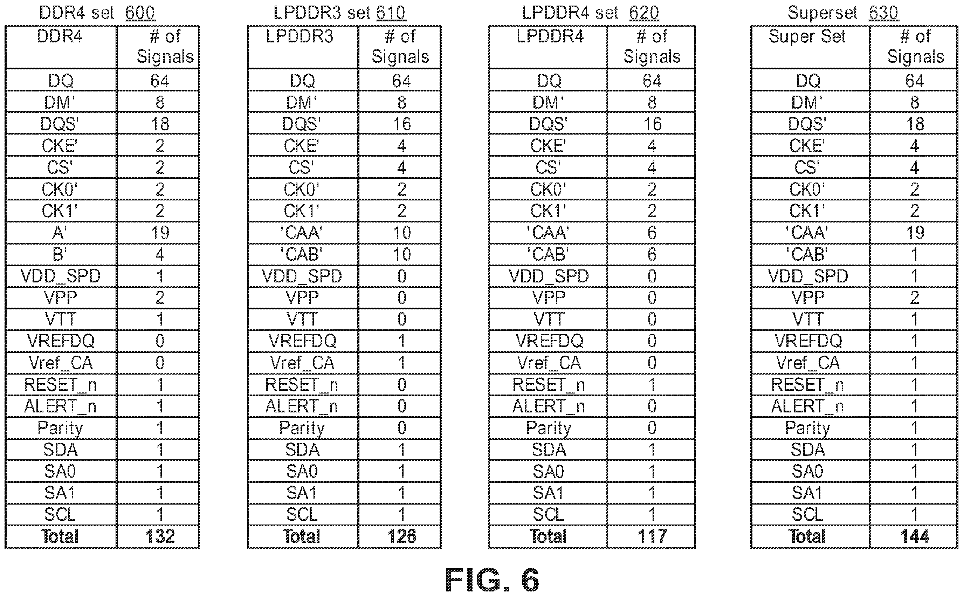

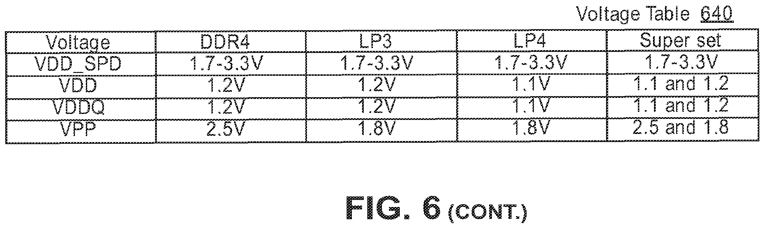

Referring now to FIG. 6, various tables shown each describe a respective set of signals defined by a corresponding memory technology. More particularly, table 600 describes a set of signals identified by a DDR4 standard, table 610 describes a set of signals identified by a LPDDR3 standard, and table 620 describes a set of signals identified by a LPDDR4 standard. Tables 610, 620, 630 are variously organized by signal type - e.g., data (DQ), data mask (DM*), differential data strobe (DQS), etc. - and list a number of signals of the signal type that are identified by the corresponding memory standard. As mentioned with respect to FIG. 5, the DDR4 standard, LPDDR3 standard and LPDDR4 standard are merely one example of different memory standards accommodated according to an embodiment. Other embodiments may accommodate fewer, more and/or other memory standards.

Table 630 illustrates a superset of signals represented by tables 600, 610, 620, where the superset may be accommodated according to an embodiment by signal lines of an interconnect such as one of interconnects 108, 208. The row-wise arrangement of tables 600, 610, 620, 630 illustrate a breakdown of the superset by signal type - e.g., where for a given signal type, the memory standard identifying a largest number of signals of that signal type determines the number of signal lines in the superset that are to support the signal type.

Table 640 illustrates a table of voltages that may be supported according to an embodiment by a voltage regulator such as one of programmable VR 112 and VR 212. Table 640 lists voltages variously specified by a DDR4 standard, a LPDDR3 standard and a LPDDR4 standard, and a superset of such voltages. A VR according to an embodiment may be programmable to provide to a memory device, via a HW interface on a PCB, any of a superset of the voltages specified in table 640.

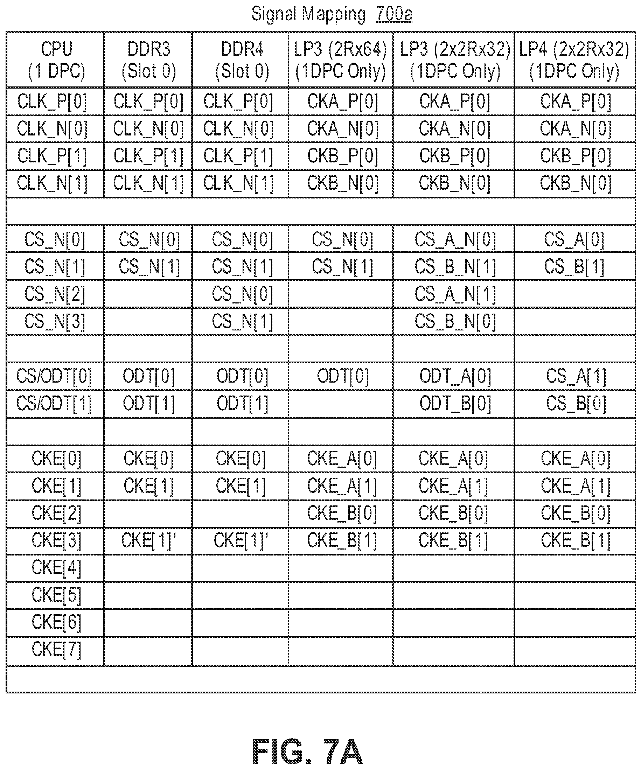

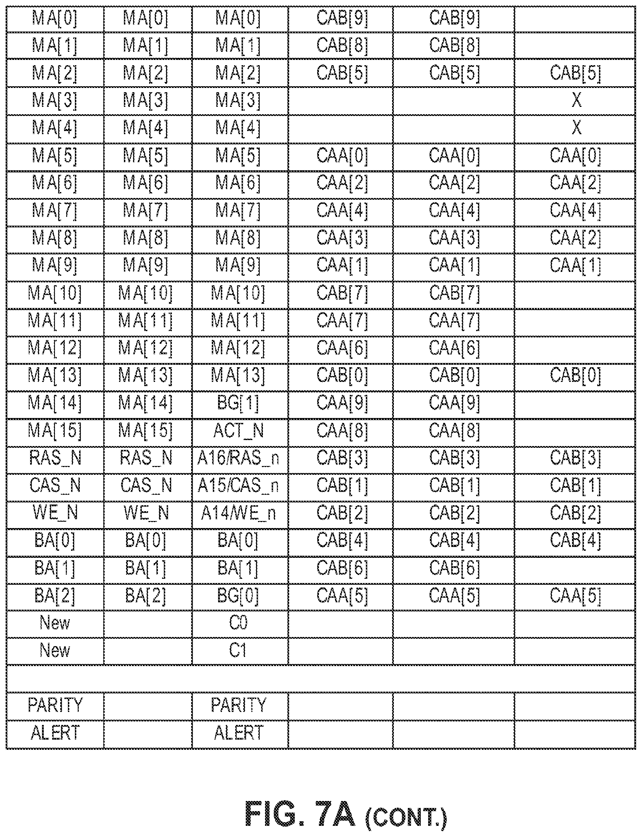

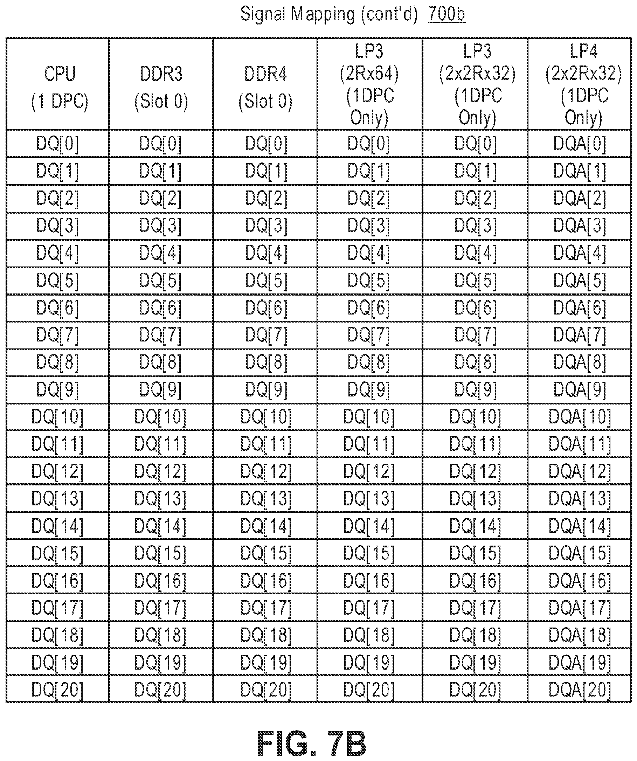

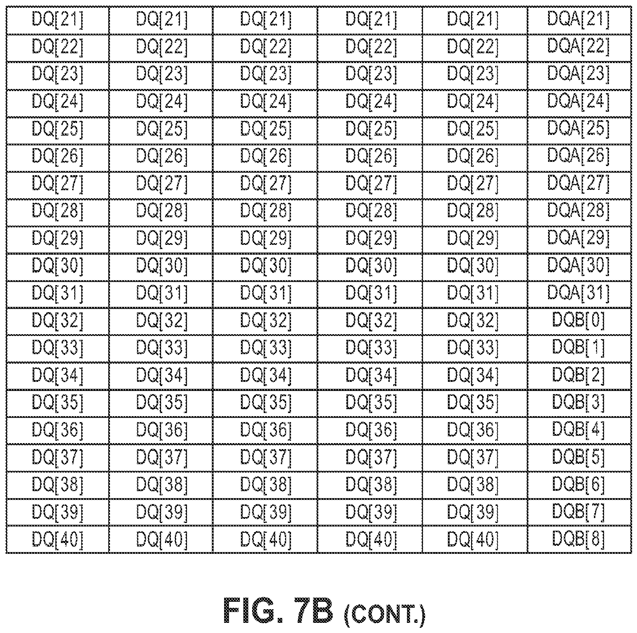

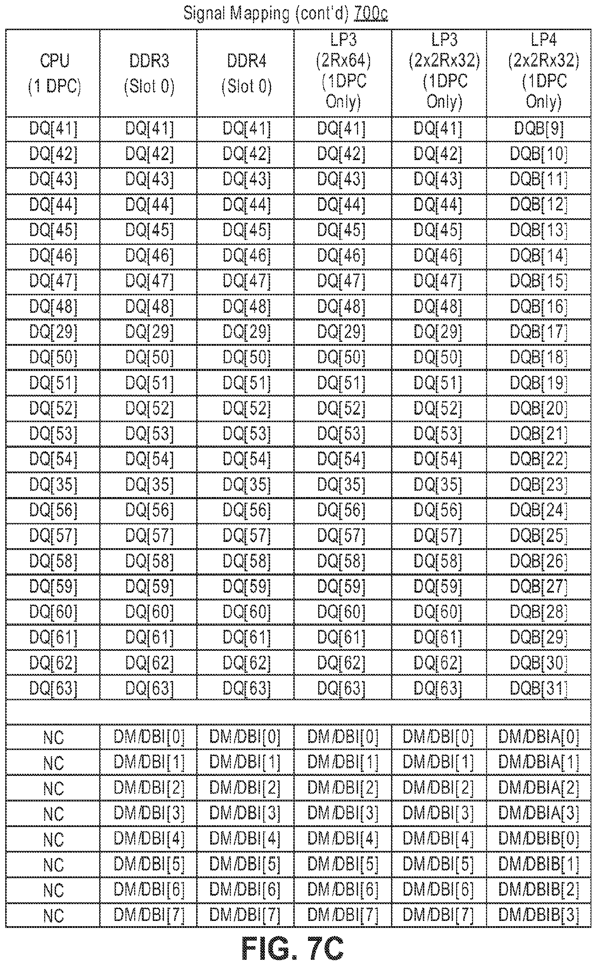

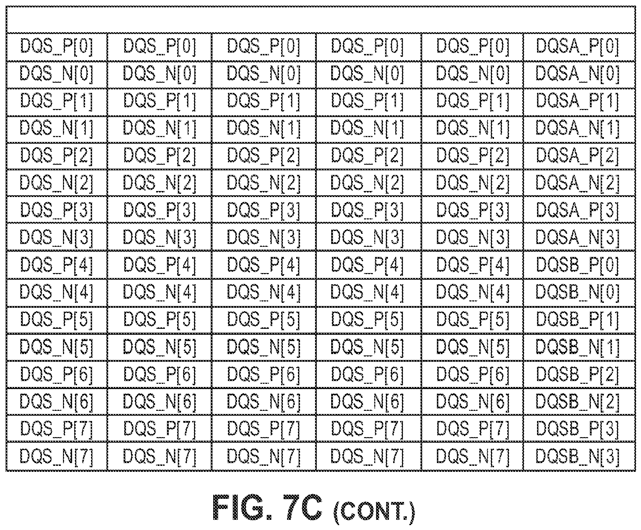

Referring now to FIGs. 7A-7C, tables 700a, 700b, 700c variously list a mapping of signals to be exchanged between a CPU and any of multiple memory devices each based on a different respective memory standard. Such a CPU may include or operate with pinout-configurable interface circuitry that may implement any of multiple different interface modes each corresponding to a respective one of such memory standards. Tables 700a, 700b, 700c each provide a respective column-wise list of signals that the CPU is capable of exchanging. For memory devices of different memory standards - in this example, DDR3, DDR4, LPDDR3 (including two different configurations thereof) and LPDDR4 - tables 700a, 700b, 700c variously map CPU-side signal identifiers each to respective signal identifiers of the memory standards shown. In table 700c, "NC" stands for "not connected". It is appreciated that a particular CPU-side signal identifiers may be associated with different I/O contacts of the CPU at different times depending upon a particular input mode of the CPU.

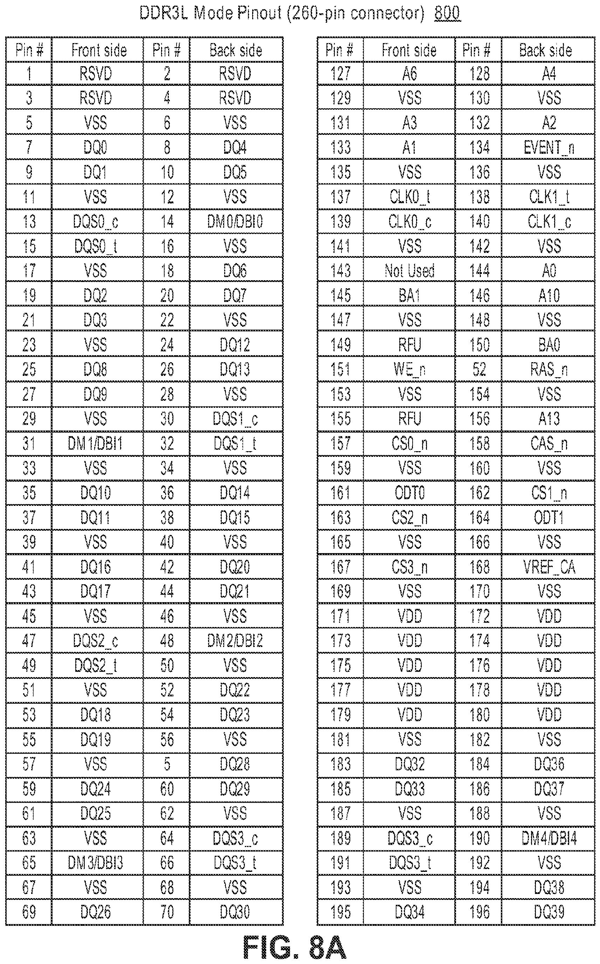

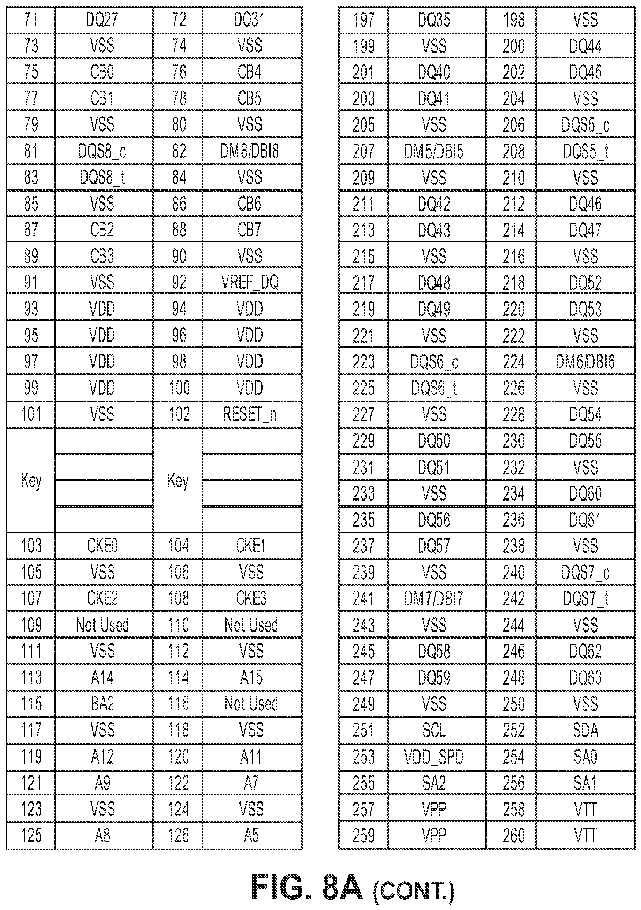

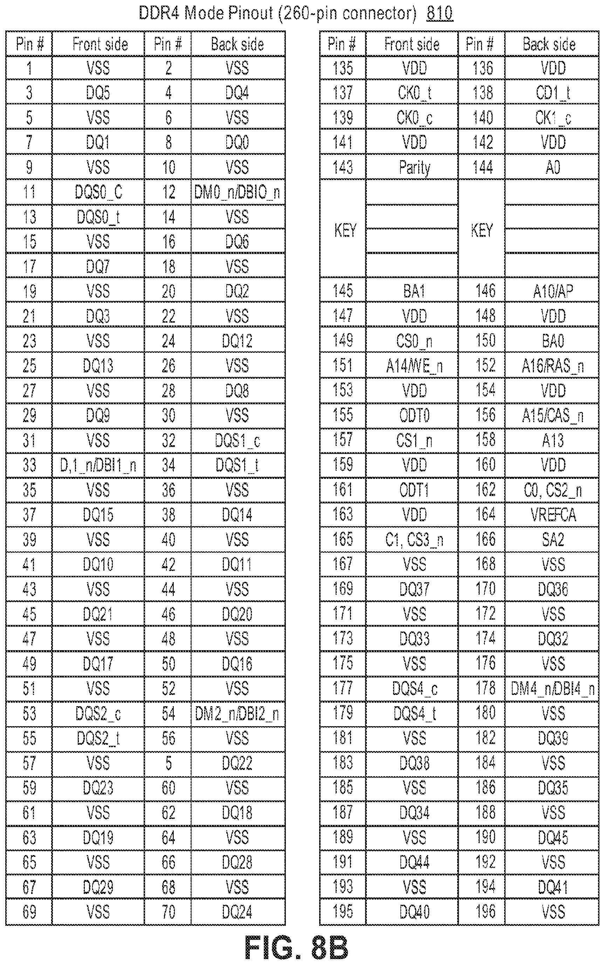

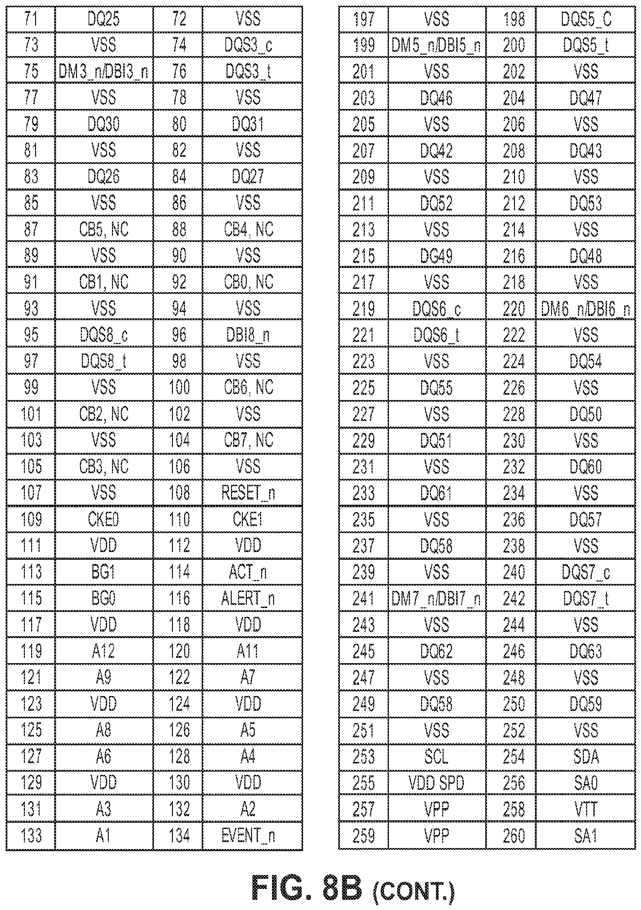

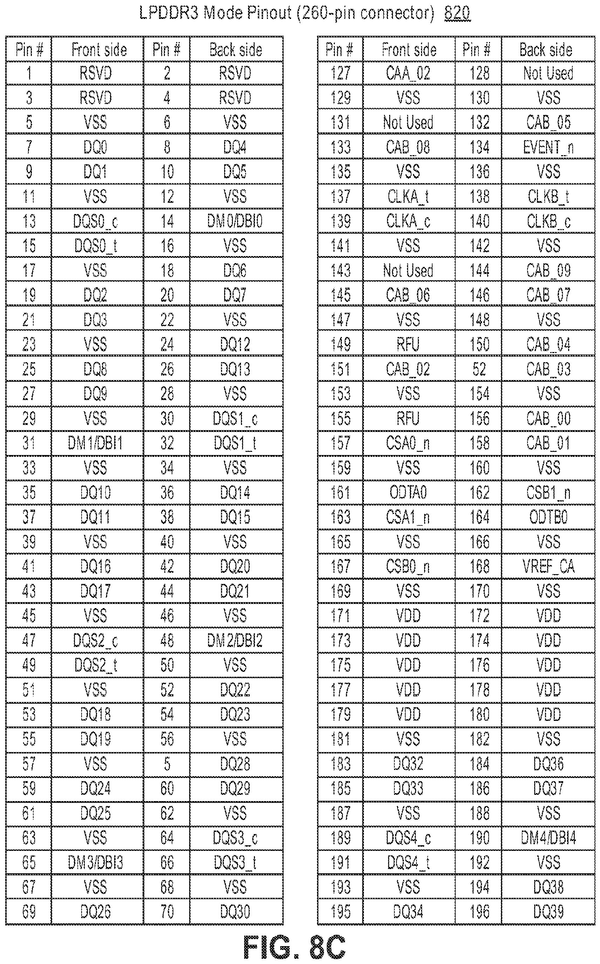

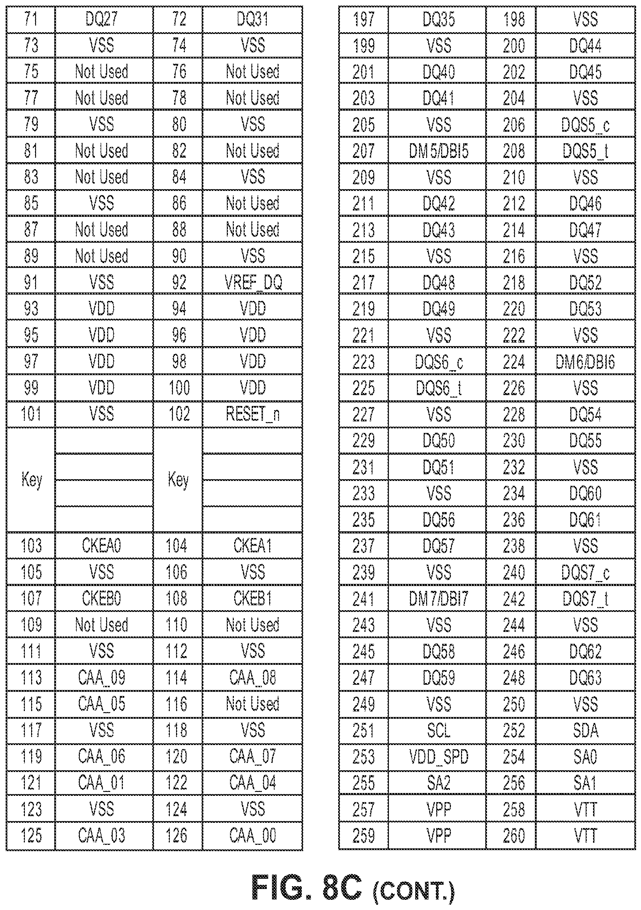

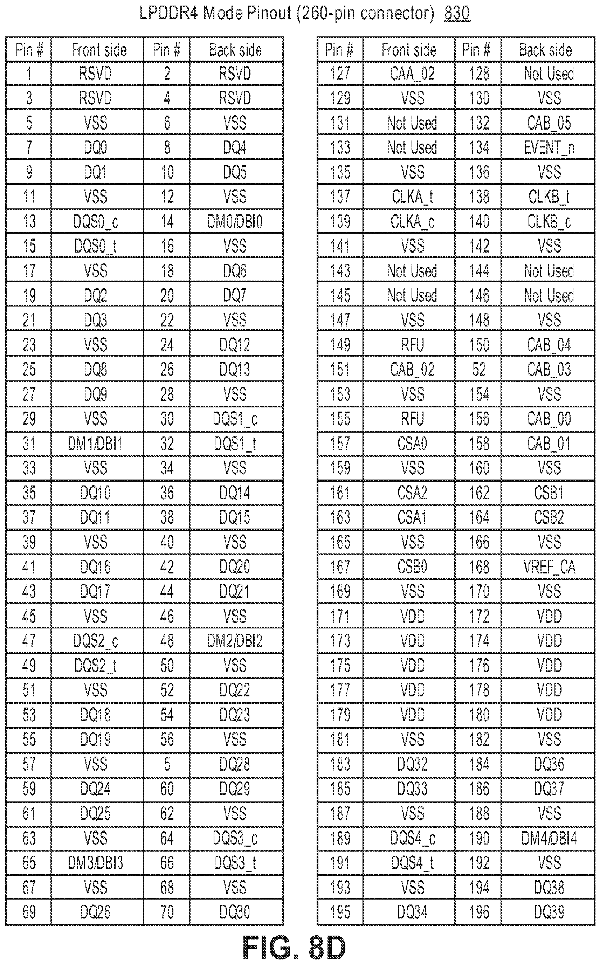

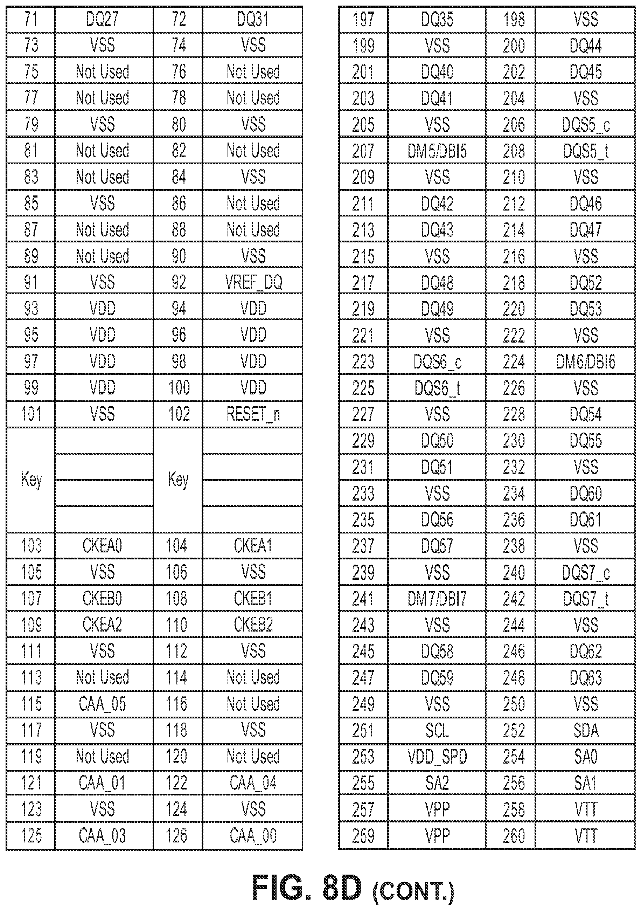

Referring now to FIGs. 8A-8D, tables 810, 820, 830, 840 each list a respective pinout of a corresponding memory device to communicate with a pinout-configurable processor device via a PCB according to an embodiment. More particularly, table 800 lists a pinout of a DDR3L device to couple to a 260-pin connector on the PCB, and table 810 lists a pinout of a DDR4 device to couple to such 260-pin connector. Table 820 lists a pinout of a LPDDR3 device to couple to such a 260-pin connector, and table 830 lists a pinout of a LPDDR4 device to couple to such a 260-pin connector.

Certain embodiments variously identify a memory type of a memory device coupled to a PCB - e.g., including identifying a particular one of the pinouts variously represented in tables 800, 810, 820, 830. In response, an interface mode of a processor device may be configured and a VR mode of a voltage regulator may be programmed to accommodate both the pinout and voltage levels that are specified by the corresponding memory standard.

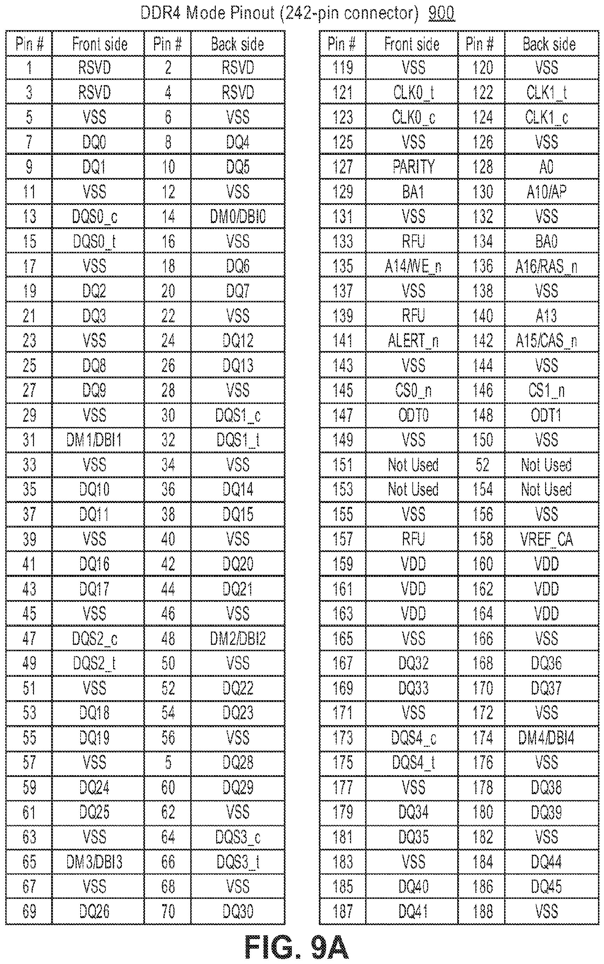

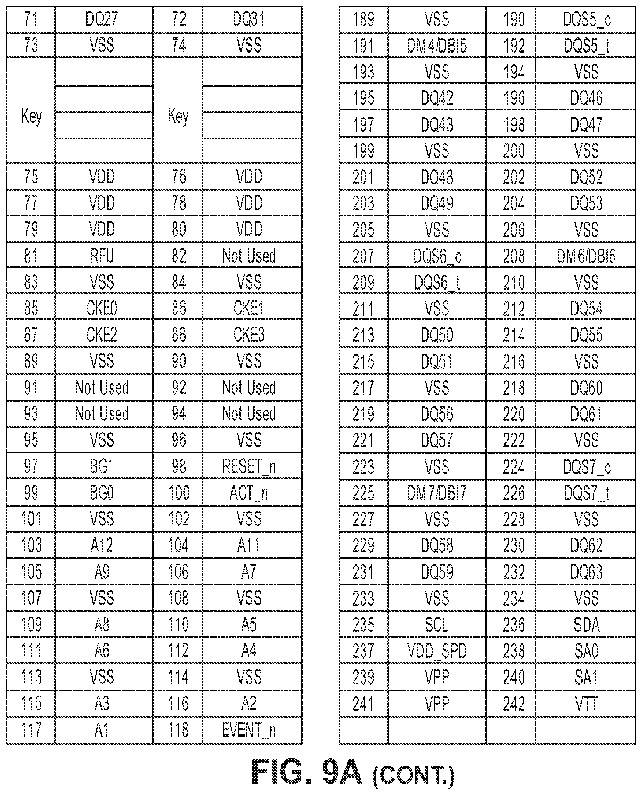

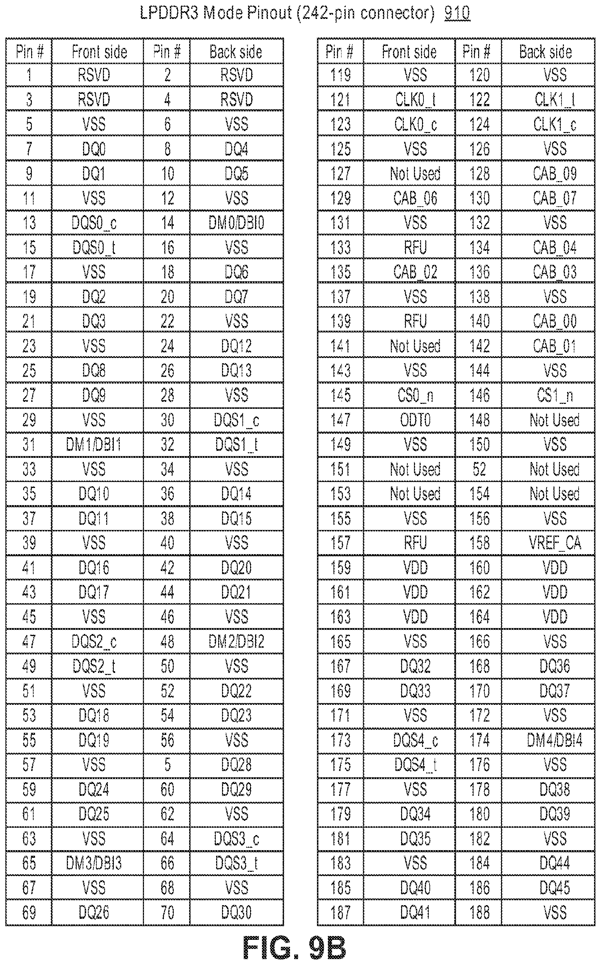

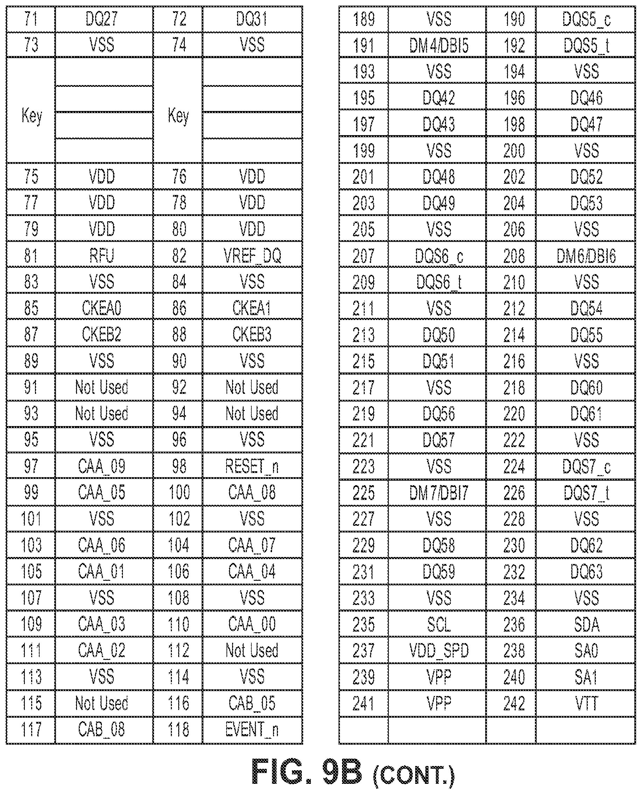

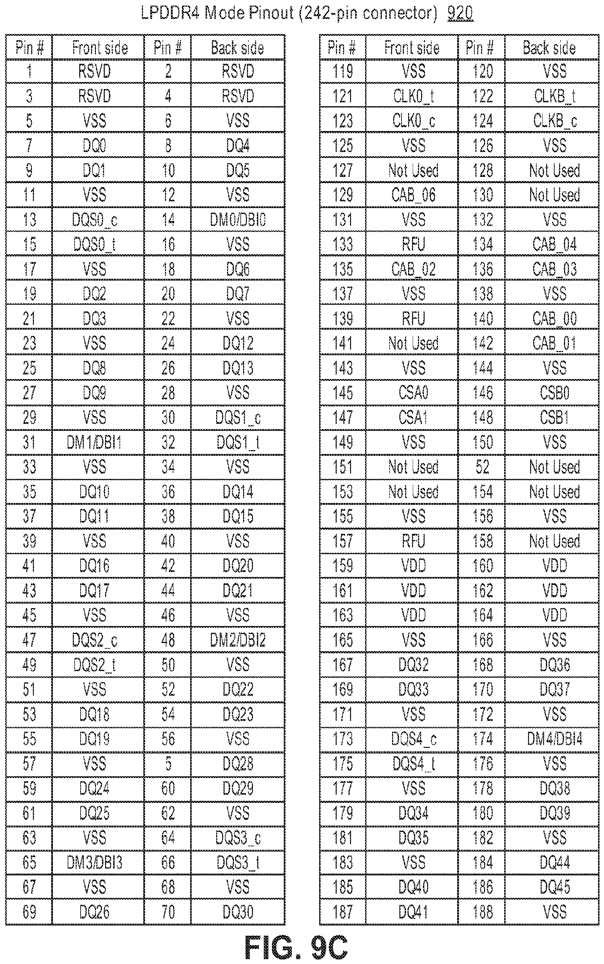

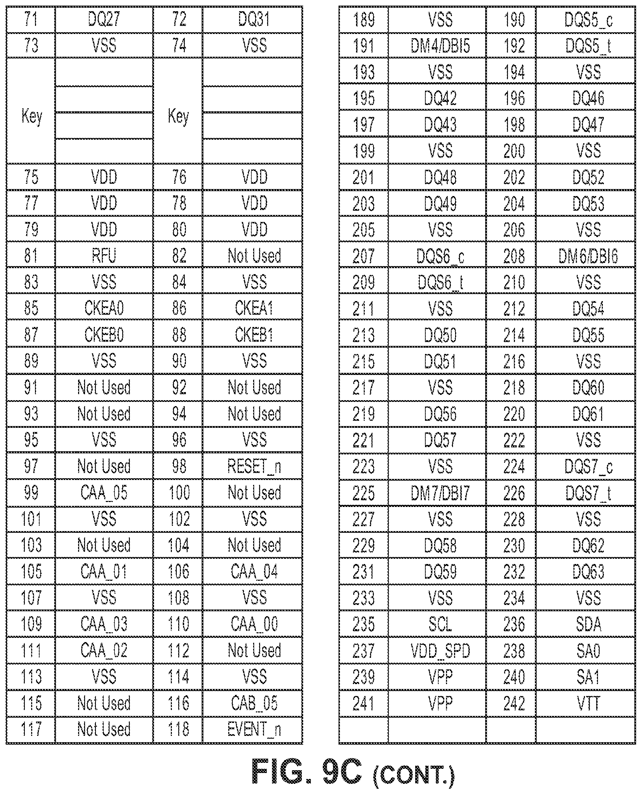

Referring now to FIGs. 9A-9C, tables 900, 910, 920 each list a respective pinout of a corresponding memory device to communicate with a pinout-configurable processor device via a PCB according to another embodiment. More particularly, table 900 lists a pinout of a DDR4 memory device to couple to a 242-pin connector on the PCB, table 910 lists a pinout of a LPDDR3 memory device to couple to such 242-pin connector, and table 920 lists a pinout of a LPDDR4 memory device to couple to such a 242-pin connector. Certain embodiments variously identify a particular one of the pinouts variously represented in tables 900, 910, 920 as corresponding to a memory device coupled to a PCB. In response, an interface mode of a processor device may be configured, and a VR mode of a voltage regulator may be programmed, to accommodate both the pinout and voltage levels that are specified by the corresponding memory standard.

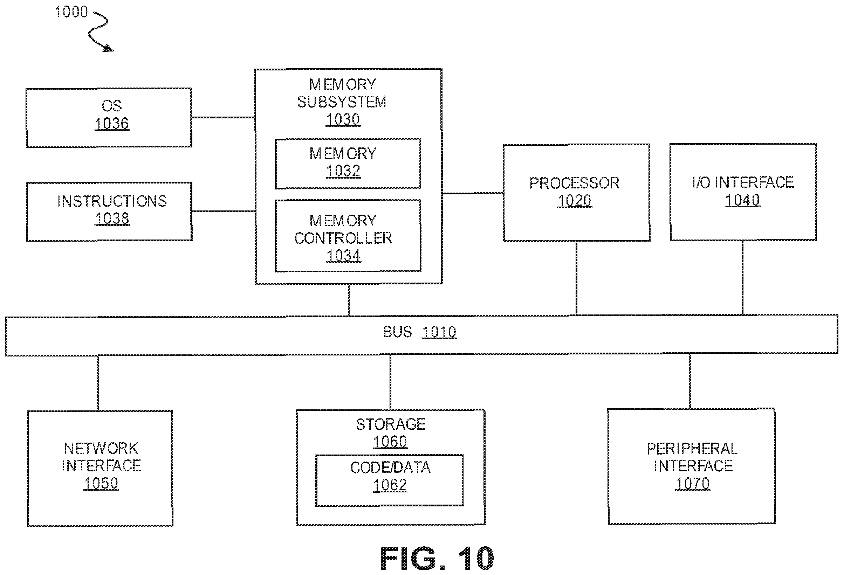

FIG. 10 is a block diagram of an embodiment of a computing system in which access to a memory device may be implemented. System 1000 represents a computing device in accordance with any embodiment described herein, and may be a laptop computer, a desktop computer, a server, a gaming or entertainment control system, a scanner, copier, printer, or other electronic device. System 1000 may include processor 1020, which provides processing, operation management, and execution of instructions for system 1000. Processor 1020 may include any type of microprocessor, central processing unit (CPU), processing core, or other processing hardware to provide processing for system 1000. Processor 1020 controls the overall operation of system 1000, and may be or include, one or more programmable general-purpose or special-purpose microprocessors, digital signal processors (DSPs), programmable controllers, application specific integrated circuits (ASICs), programmable logic devices (PLDs), or the like, or a combination of such devices.

Memory subsystem 1030 represents the main memory of system 1000, and provides temporary storage for code to be executed by processor 1020, or data values to be used in executing a routine. Memory subsystem 1030 may include one or more memory devices such as read-only memory (ROM), flash memory, one or more varieties of random access memory (RAM), or other memory devices, or a combination of such devices. Memory subsystem 1030 stores and hosts, among other things, operating system (OS) 1036 to provide a software platform for execution of instructions in system 1000. Additionally, other instructions 1038 are stored and executed from memory subsystem 1030 to provide the logic and the processing of system 1000. OS 1036 and instructions 1038 are executed by processor 1020.

Memory subsystem 1030 may include memory device 1032 where it stores data, instructions, programs, or other items. In one embodiment, memory subsystem includes memory controller 1034, which accesses memory 1032 - e.g., on behalf of processor 1020. Memory controller 1034 may be incorporated into a packaged device including processor 1020 - e.g., where processor 1020 accesses memory 1032 via a PCB (not shown) having disposed therein or thereon components providing functionality such as that discussed herein.

Processor 1020 and memory subsystem 1030 may be coupled to bus/bus system 1010. Bus 1010 is an abstraction that represents any one or more separate physical buses, communication lines/interfaces, and/or point-to-point connections, connected by appropriate bridges, adapters, and/or controllers. Therefore, bus 1010 may include, for example, one or more of a system bus, a Peripheral Component Interconnect (PCI) bus, a HyperTransport or industry standard architecture (ISA) bus, a small computer system interface (SCSI) bus, a universal serial bus (USB), or an Institute of Electrical and Electronics Engineers (IEEE) standard 1394 bus (commonly referred to as "Firewire"). The buses of bus 1010 may also correspond to interfaces in network interface 1050.

System 1000 may also include one or more input/output (I/O) interface(s) 1040, network interface 1050, one or more internal mass storage device(s) 1060, and peripheral interface 1070 coupled to bus 1010. I/O interface 1040 may include one or more interface components through which a user interacts with system 1000 (e.g., video, audio, and/or alphanumeric interfacing). Network interface 1050 provides system 1000 the ability to communicate with remote devices (e.g., servers, other computing devices) over one or more networks. Network interface 1050 may include an Ethernet adapter, wireless interconnection components, USB (universal serial bus), or other wired or wireless standards-based or proprietary interfaces.

Storage 1060 may be or include any conventional medium for storing large amounts of data in a nonvolatile manner, such as one or more magnetic, solid state, or optical based disks, or a combination. Storage 1060 holds code or instructions and data 1062 in a persistent state (i.e., the value is retained despite interruption of power to system 1000). Storage 1060 may be generically considered to be a "memory," although memory 1030 is the executing or operating memory to provide instructions to processor 1020. Whereas storage 1060 is nonvolatile, memory 1030 may include volatile memory (i.e., the value or state of the data is indeterminate if power is interrupted to system 1000).

Peripheral interface 1070 may include any hardware interface not specifically mentioned above. Peripherals refer generally to devices that connect dependently to system 1000. A dependent connection is one where system 1000 provides the software and/or hardware platform on which operation executes, and with which a user interacts.

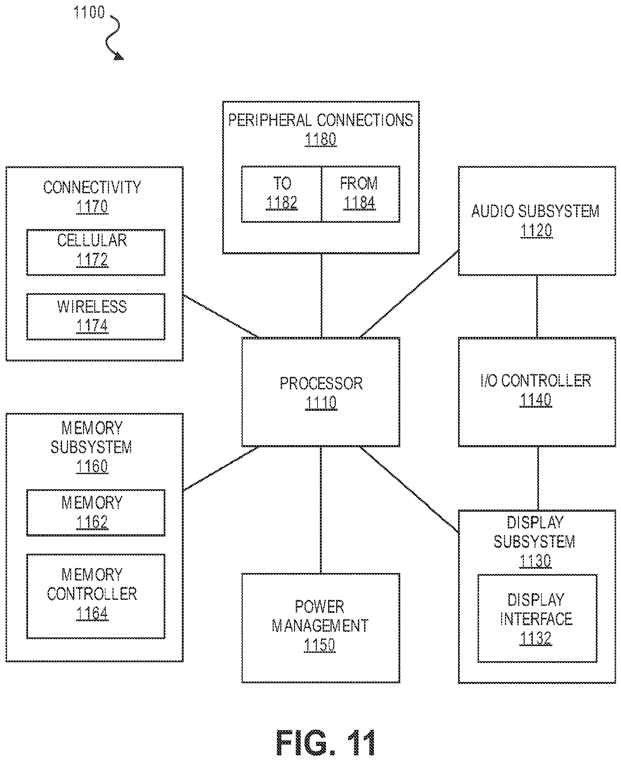

FIG. 11 is a block diagram of an embodiment of a mobile device in which access to a memory device may be implemented. Device 1100 represents a mobile computing device, such as a computing tablet, a mobile phone or smartphone, a wireless-enabled e-reader, or other mobile device. It will be understood that certain of the components are shown generally, and not all components of such a device are shown in device 1100. Device 1100 may include processor 1110, which performs the primary processing operations of device 1100. Processor 1110 may include one or more physical devices, such as microprocessors, application processors, microcontrollers, programmable logic devices, or other processing means. The processing operations performed by processor 1110 include the execution of an operating platform or operating system on which applications and/or device functions are executed. The processing operations include operations related to I/O (input/output) with a human user or with other devices, operations related to power management, and/or operations related to connecting device 1100 to another device. The processing operations may also include operations related to audio I/O and/or display I/O.

In one embodiment, device 1100 includes audio subsystem 1120, which represents hardware (e.g., audio hardware and audio circuits) and software (e.g., drivers, codecs) components associated with providing audio functions to the computing device. Audio functions may include speaker and/or headphone output, as well as microphone input. Devices for such functions may be integrated into device 1100, or connected to device 1100. In one embodiment, a user interacts with device 1100 by providing audio commands that are received and processed by processor 1110.

Display subsystem 1130 represents hardware (e.g., display devices) and software (e.g., drivers) components that provide a visual and/or tactile display for a user to interact with the computing device. Display subsystem 1130 may include display interface 1132, which may include the particular screen or hardware device used to provide a display to a user. In one embodiment, display interface 1132 includes logic separate from processor 1110 to perform at least some processing related to the display. In one embodiment, display subsystem 1130 includes a touchscreen device that provides both output and input to a user.

I/O controller 1140 represents hardware devices and software components related to interaction with a user. I/O controller 1140 may operate to manage hardware that is part of audio subsystem 1120 and/or display subsystem 1130. Additionally, I/O controller 1140 illustrates a connection point for additional devices that connect to device 1100 through which a user might interact with the system. For example, devices that may be attached to device 1100 might include microphone devices, speaker or stereo systems, video systems or other display device, keyboard or keypad devices, or other I/O devices for use with specific applications such as card readers or other devices.

As mentioned above, I/O controller 1140 may interact with audio subsystem 1120 and/or display subsystem 1130. For example, input through a microphone or other audio device may provide input or commands for one or more applications or functions of device 1100. Additionally, audio output may be provided instead of or in addition to display output. In another example, if display subsystem includes a touchscreen, the display device also acts as an input device, which may be at least partially managed by I/O controller 1140. There may also be additional buttons or switches on device 1100 to provide I/O functions managed by I/O controller 1140.

In one embodiment, I/O controller 1140 manages devices such as accelerometers, cameras, light sensors or other environmental sensors, gyroscopes, global positioning system (GPS), or other hardware that may be included in device 1100. The input may be part of direct user interaction, as well as providing environmental input to the system to influence its operations (such as filtering for noise, adjusting displays for brightness detection, applying a flash for a camera, or other features).

In one embodiment, device 1100 includes power management 1150 that manages battery power usage, charging of the battery, and features related to power saving operation. Memory subsystem 1160 may include memory device(s) 1162 for storing information in device 1100. Memory subsystem 1160 may include nonvolatile (state does not change if power to the memory device is interrupted) and/or volatile (state is indeterminate if power to the memory device is interrupted) memory devices. Memory 1160 may store application data, user data, music, photos, documents, or other data, as well as system data (whether long-term or temporary) related to the execution of the applications and functions of system 1100.

In one embodiment, memory subsystem 1160 includes memory controller 1164 (which could also be considered part of the control of system 1100, and could potentially be considered part of processor 1110). Memory controller 1164 may communicate signaling to provide access to memory 1162 - e.g., on behalf of processor 1110. Memory controller 1164 may be incorporated into a packaged device including processor 1110 - e.g., where processor 1110 accesses memory 1162 via a PCB (not shown) having disposed therein or thereon components providing functionality such as that discussed herein.

Connectivity 1170 may include hardware devices (e.g., wireless and/or wired connectors and communication hardware) and software components (e.g., drivers, protocol stacks) to enable device 1100 to communicate with external devices. The device could be separate devices, such as other computing devices, wireless access points or base stations, as well as peripherals such as headsets, printers, or other devices.

Connectivity 1170 may include multiple different types of connectivity. To generalize, device 1100 is illustrated with cellular connectivity 1172 and wireless connectivity 1174. Cellular connectivity 1172 refers generally to cellular network connectivity provided by wireless carriers, such as provided via GSM (global system for mobile communications) or variations or derivatives, CDMA (code division multiple access) or variations or derivatives, TDM (time division multiplexing) or variations or derivatives, LTE (long term evolution - also referred to as "4G"), or other cellular service standards. Wireless connectivity 1174 refers to wireless connectivity that is not cellular, and may include personal area networks (such as Bluetooth), local area networks (such as WiFi), and/or wide area networks (such as WiMax), or other wireless communication. Wireless communication refers to transfer of data through the use of modulated electromagnetic radiation through a non-solid medium. Wired communication occurs through a solid communication medium.

Peripheral connections 1180 include hardware interfaces and connectors, as well as software components (e.g., drivers, protocol stacks) to make peripheral connections. It will be understood that device 1100 could both be a peripheral device ("to" 1182) to other computing devices, as well as have peripheral devices ("from" 1184) connected to it. Device 1100 commonly has a "docking" connector to connect to other computing devices for purposes such as managing (e.g., downloading and/or uploading, changing, synchronizing) content on device 1100. Additionally, a docking connector may allow device 1100 to connect to certain peripherals that allow device 1100 to control content output, for example, to audiovisual or other systems.

In addition to a proprietary docking connector or other proprietary connection hardware, device 1100 may make peripheral connections 1180 via common or standards-based connectors. Common types may include a Universal Serial Bus (USB) connector (which may include any of a number of different hardware interfaces), DisplayPort including MiniDisplayPort (MDP), High Definition Multimedia Interface (HDMI), Firewire, or other type.

In one implementation, a device comprises a first hardware (HW) interface to couple a printed circuit board (PCB) to any of memory devices each corresponding to a different respective set of signals of multiple sets of signals, and a second HW interface to couple the PCB to a processor device, wherein the processor device detects connectivity of a memory device to the first HW interface and configures, based on a memory type of the memory device, a first interface mode of interface modes each corresponding to a different respective one of the multiple sets of signals. The device further comprises a voltage regulator (VR) coupled to the first HW interface, the VR to be programmed, based on the memory type, to a first VR mode of VR modes each corresponding to a different respective one of the memory devices, and to provide one or more voltages to the first interface based on the first VR mode, and an interconnect, disposed in or on the PCB, including x signal lines each coupling a respective input/output (I/O) contact of the first HW interface to a respective I/O contact of the second HW interface, wherein x is an integer equal to a total number of signals of a superset of the multiple sets of signals.

In an embodiment, the multiple sets of signals are each specified by a different respective one of multiple memory standards. In another embodiment, the multiple memory standards include one or more dual data rate memory standards. In another embodiment, the one or more dual data rate memory standards include a DDR3 standard or a DDR4 standard. In another embodiment, the one or more dual data rate memory standards include a low power dual data rate memory standard. In another embodiment, the one or more dual data rate memory standards include a LPDDR3 standard or a LPDDR4 standard.

In another embodiment, the device further comprises detector logic disposed in or on the PCB, the detector logic to generate and send to the processor device a signal indicating the connectivity of the memory device to the first HW interface. In another embodiment, the detector logic is based on a serial presence detect standard. In another embodiment, state machine logic identifies the memory type of the memory device in response to the signal indicating the connectivity of the memory device to the first HW interface. In another embodiment, the state machine logic comprises state machine circuitry of the processor device. In another embodiment, the processor device executes a Basic Input/Output System (BIOS) process including the state machine logic. In another embodiment, the first HW interface includes a mechanical connector. In another embodiment, the second HW interface includes a pad array. In another embodiment, the multiple memory devices include one or more dual in-line memory modules.

In another implementation, a system comprises a printed circuit board (PCB), a first hardware (HW) interface disposed in or on the PCB, the first HW interface to couple to any of memory devices each corresponding to a different respective set of signals of multiple sets of signals, a second HW interface disposed in or on the PCB and a processor device coupled to the PCB via the second HW interface, the processor device the processor device to detect connectivity of a memory device to the first HW interface and to configure, based on a memory type of the memory device, a first interface mode of interface modes each corresponding to a different respective one of the multiple sets of signals. The system further comprises a voltage regulator (VR) coupled to the first HW interface, the VR to be programmed, based on the memory type, to a first VR mode of VR modes each corresponding to a different respective one of the memory devices, and to provide one or more voltages to the first interface based on the first VR mode, and an interconnect, disposed in or on the PCB, including x signal lines each coupling a respective input/output (I/O) contact of the first HW interface to a respective I/O contact of the second HW interface, wherein x is an integer equal to a total number of signals of a superset of the multiple sets of signals.

In an embodiment, the multiple sets of signals are each specified by a different respective one of multiple memory standards. In another embodiment, the multiple memory standards include one or more dual data rate memory standards. In another embodiment, the one or more dual data rate memory standards include a DDR3 standard or a DDR4 standard. In another embodiment, the one or more dual data rate memory standards include a low power dual data rate memory standard. In another embodiment, the one or more dual data rate memory standards include a LPDDR3 standard or a LPDDR4 standard.

In another embodiment, the system further comprises detector logic disposed in or on the PCB, the detector logic to generate and send to the processor device a signal indicating the connectivity of the memory device to the first HW interface. In another embodiment, the detector logic is based on a serial presence detect standard. In another embodiment, state machine logic identifies the memory type of the memory device in response to the signal indicating the connectivity of the memory device to the first HW interface. In another embodiment, the state machine logic comprises state machine circuitry of the processor device. In another embodiment, the processor device executes a Basic Input/Output System (BIOS) process including the state machine logic. In another embodiment, the first HW interface includes a mechanical connector. In another embodiment, the second HW interface includes a pad array. In another embodiment, the multiple memory devices include one or more dual in-line memory modules.

In another implementation, a method comprises detecting connectivity of a memory device to a first hardware interface disposed in or on a printed circuit board (PCB), and in response to detecting the connectivity, identifying a memory type of the memory device, wherein, based on the memory type, a processor device configures a first interface mode of multiple interface modes of the processor device, the multiple interface modes each corresponding to a different respective set of signals of multiple sets of signals, the processor device coupled to the PCB via a second hardware interface disposed in or on the PCB. The method further comprises, based on the memory type, programming a first voltage regulator (VR) mode of multiple VR modes of a VR, the multiple VR modes each corresponding to a different respective one of multiple memory types, wherein the VR provides one or more voltages to the first interface based on the first VR mode, and during operation of the memory device based on the one or more voltages, exchanging signals between the memory device and the processor device via x signal lines of an interconnect disposed in or on the PCB, wherein x is an integer equal to a total number of signals of a superset of the multiple sets of signals.

In an embodiment, the multiple sets of signals are each specified by a different respective one of multiple memory standards. In another embodiment, the multiple memory standards include one or more dual data rate memory standards. In another embodiment, the one or more dual data rate memory standards include a DDR3 standard or a DDR4 standard. In another embodiment, the one or more dual data rate memory standards include a low power dual data rate memory standard. In another embodiment, the one or more dual data rate memory standards include a LPDDR3 standard or a LPDDR4 standard.

In another embodiment, the method further comprises with detector logic disposed in or on the PCB, generating and sending to the processor device a signal indicating the connectivity of the memory device to the first hardware interface. In another embodiment, the detector logic is based on a serial presence detect standard. In another embodiment, state machine logic identifies the memory type of the memory device in response to the signal indicating the connectivity of the memory device to the first hardware interface. In another embodiment, the state machine logic comprises state machine circuitry of the processor device. In another embodiment, the processor device executes a Basic Input/Output System (BIOS) process including the state machine logic. In another embodiment, the first hardware interface includes a mechanical connector. In another embodiment, the second hardware interface includes a pad array. In another embodiment, the multiple memory devices include one or more dual in-line memory modules.

In another implementation, a computer-readable storage medium has stored thereon instructions which, when executed by one or more processing units, cause the one or more processing units to perform a method comprising detecting connectivity of a memory device to a first hardware interface disposed in or on a printed circuit board (PCB), and in response to detecting the connectivity, identifying a memory type of the memory device, wherein, based on the memory type, a processor device configures a first interface mode of multiple interface modes of the processor device, the multiple interface modes each corresponding to a different respective set of signals of multiple sets of signals, the processor device coupled to the PCB via a second hardware interface disposed in or on the PCB. The method further comprises based on the memory type, programming a first voltage regulator (VR) mode of multiple VR modes of a VR, the multiple VR modes each corresponding to a different respective one of multiple memory types, wherein the VR provides one or more voltages to the first interface based on the first VR mode, and during operation of the memory device based on the one or more voltages, exchanging signals between the memory device and the processor device via x signal lines of an interconnect disposed in or on the PCB, wherein x is an integer equal to a total number of signals of a superset of the multiple sets of signals.

In an embodiment, the multiple sets of signals are each specified by a different respective one of multiple memory standards. In another embodiment, the multiple memory standards include one or more dual data rate memory standards. In another embodiment, the one or more dual data rate memory standards include a DDR3 standard or a DDR4 standard. In another embodiment, the one or more dual data rate memory standards include a low power dual data rate memory standard. In another embodiment, the one or more dual data rate memory standards include a LPDDR3 standard or a LPDDR4 standard.

In another embodiment, the method further comprises, with detector logic disposed in or on the PCB, generating and sending to the processor device a signal indicating the connectivity of the memory device to the first hardware interface. In another embodiment, the detector logic is based on a serial presence detect standard. In another embodiment, state machine logic identifies the memory type of the memory device in response to the signal indicating the connectivity of the memory device to the first hardware interface. In another embodiment, the state machine logic comprises state machine circuitry of the processor device. In another embodiment, the processor device executes a Basic Input/Output System (BIOS) process including the state machine logic. In another embodiment, the first hardware interface includes a mechanical connector. In another embodiment, the second hardware interface includes a pad array. In another embodiment, the multiple memory devices include one or more dual in-line memory modules.

Techniques and architectures for operating a memory device are described herein. In the above description, for purposes of explanation, numerous specific details are set forth in order to provide a thorough understanding of certain embodiments. It will be apparent, however, to one skilled in the art that certain embodiments can be practiced without these specific details. In other instances, structures and devices are shown in block diagram form in order to avoid obscuring the description.

Reference in the specification to "one embodiment" or "an embodiment" means that a particular feature, structure, or characteristic described in connection with the embodiment is included in at least one embodiment of the invention. The appearances of the phrase "in one embodiment" in various places in the specification are not necessarily all referring to the same embodiment.

Some portions of the detailed description herein are presented in terms of algorithms and symbolic representations of operations on data bits within a computer memory. These algorithmic descriptions and representations are the means used by those skilled in the computing arts to most effectively convey the substance of their work to others skilled in the art. An algorithm is here, and generally, conceived to be a self-consistent sequence of steps leading to a desired result. The steps are those requiring physical manipulations of physical quantities. Usually, though not necessarily, these quantities take the form of electrical or magnetic signals capable of being stored, transferred, combined, compared, and otherwise manipulated. It has proven convenient at times, principally for reasons of common usage, to refer to these signals as bits, values, elements, symbols, characters, terms, numbers, or the like.

It should be borne in mind, however, that all of these and similar terms are to be associated with the appropriate physical quantities and are merely convenient labels applied to these quantities. Unless specifically stated otherwise as apparent from the discussion herein, it is appreciated that throughout the description, discussions utilizing terms such as "processing" or "computing" or "calculating" or "determining" or "displaying" or the like, refer to the action and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

Certain embodiments also relate to apparatus for performing the operations herein. This apparatus may be specially constructed for the required purposes, or it may comprise a general purpose computer selectively activated or reconfigured by a computer program stored in the computer. Such a computer program may be stored in a computer readable storage medium, such as, but is not limited to, any type of disk including floppy disks, optical disks, CD-ROMs, and magnetic-optical disks, read-only memories (ROMs), random access memories (RAMs) such as dynamic RAM (DRAM), EPROMs, EEPROMs, magnetic or optical cards, or any type of media suitable for storing electronic instructions, and coupled to a computer system bus.

The algorithms and displays presented herein are not inherently related to any particular computer or other apparatus. Various general purpose systems may be used with programs in accordance with the teachings herein, or it may prove convenient to construct more specialized apparatus to perform the required method steps. The required structure for a variety of these systems will appear from the description herein. In addition, certain embodiments are not described with reference to any particular programming language. It will be appreciated that a variety of programming languages may be used to implement the teachings of such embodiments as described herein.

The invention is set out in the appended independent claims . Advantageous embodiments are defined by the appended dependent claims. The embodiments or examples of the above description which are not covered by the appended claims are considered as not being part of the invention according to this description.

## Claims

1. A system (100) configured to facilitate operation of a processor with any of multiple memory devices each corresponding to a different respective set of signal, the system (100) comprising:
a printed circuit board, PCB, (102);
a first hardware, HW, interface (106) disposed in or on the PCB (102), the first HW interface (106) to couple to any of memory devices (130) each corresponding to a different respective set of signals of multiple sets of signals;
a second HW interface (104) disposed in or on the PCB (102);
a processor device (120) coupled to the PCB (102) via the second HW interface (104), the processor device (120) to detect connectivity of a memory device (130-136) to the first HW interface (106) and to configure, based on a memory type of the memory device, a first interface mode of interface modes each corresponding to a different respective one of the multiple sets of signals;
a voltage regulator, VR, (112) coupled to the first HW interface (106), the VR (112) to be programmed, based on the memory type, to a first VR mode of VR modes each corresponding to a different respective one of the memory devices, and to provide one or more voltages to the first interface based on the first VR mode; and
an interconnect (108), disposed in or on the PCB (102), including x signal lines each coupling a respective input/output, I/O, contact of the first HW interface (106) to a respective I/O contact of the second HW interface (104), wherein x is an integer equal to a total number of signals of a superset of the multiple sets of signals **characterized in that**
the processor device (120) includes signal MUX circuitry (122) to provide mappings of I/O contacts to a respective signal or voltage of an interface at the connection to HW interface (104); wherein the MUX circuitry is configured at different times to any of different interface modes each corresponding to a different respective memory technology, where an interface mode provides a respective mapping to accommodate the corresponding memory technology.

2. The system (100) of claim 1, wherein the multiple sets of signals are each specified by a different respective one of multiple memory standards.

3. The system (100) of claim 2, wherein the multiple memory standards include one or more dual data rate memory standards.

4. The system (100) of claim 3, wherein the processor device (120) executes a Basic Input/Output System, BIOS, process including state machine logic.

5. The system (100) of any of claims 1, 2 and 4, wherein the multiple memory devices (130-136) include one or more dual in-line memory modules.

6. The system (100) of any of claims 1 and 2, further comprising detector logic (210) disposed in or on the PCB (102), the detector logic to generate and send to the processor device (220) a signal indicating the connectivity of the memory device to the first HW interface (206).

7. The system (100) of claim 6, wherein the detector logic (210) is based on a serial presence detect standard.

8. The system (100) of claim 6, wherein the state machine logic identifies the memory type of the memory device in response to the signal indicating the connectivity of the memory device to the first HW interface (106).

9. The system (100) of claim 4, wherein the state machine logic comprises state machine circuitry of the processor device (120).

10. A method (300) for facilitating operation of a processor with any of multiple memory devices each corresponding to different respective set of signal, the method comprising:
detecting connectivity of a memory device to a first hardware interface disposed in or on a printed circuit board (PCB) (310);
in response to detecting the connectivity, identifying a memory type of the memory device, wherein, based on the memory type, a processor device (120) configures a first interface mode of multiple interface modes of the processor device, the multiple interface modes each corresponding to a different respective set of signals of multiple sets of signals, the processor device coupled to the PCB via a second hardware interface disposed in or on the PCB (320);
based on the memory type, programming a first voltage regulator (VR) mode of multiple VR modes of a VR, the multiple VR modes each corresponding to a different respective one of multiple memory types, wherein the VR provides one or more voltages to the first interface based on the first VR mode (330); and
during operation of the memory device based on the one or more voltages, exchanging signals between the memory device and the processor device via x signal lines of an interconnect disposed in or on the PCB, wherein x is an integer equal to a total number of signals of a superset of the multiple sets of signals, **characterized in that**,
the processor device (120) includes signal MUX circuitry (122) to provide-mappings of I/O contacts to a respective signal or voltage of an interface at the connection to HW interface (104); wherein the MUX circuitry is configured at different times to any of different interface modes each corresponding to a different respective memory technology, where an interface mode provides a respective mapping to accommodate the corresponding memory technology.

11. The method (300) of claim 10, wherein the multiple sets of signals are each specified by a different respective one of multiple memory standards.

## Patentansprüche

1. System (100), das dazu ausgelegt ist, den Betrieb eines Prozessors mit einer beliebigen von mehreren Speichervorrichtungen, von denen jede einem anderen jeweiligen Satz von Signalen entspricht, zu erleichtern, wobei das System (100) Folgendes umfasst:
eine Leiterplatte, PCB, (102);
eine erste Hardware(HW)-Schnittstelle (106), die in oder auf der PCB (102) angeordnet ist, wobei die erste HW-Schnittstelle (106) an eine beliebige von Speichervorrichtungen (130), von denen jede einem anderen jeweiligen Satz von Signalen von mehreren Sätzen von Signalen entspricht, gekoppelt werden soll;
eine zweite HW-Schnittstelle (104), die in oder auf der PCB (102) angeordnet ist;
eine Prozessorvorrichtung (120), die via die zweite HW-Schnittstelle (104) an die PCB (102) gekoppelt ist, wobei die Prozessorvorrichtung (120) eine Konnektivität einer Speichervorrichtung (130-136) zur ersten HW-Schnittstelle (106) detektieren soll und auf Basis eines Speichertyps der Speichervorrichtung einen ersten Schnittstellenmodus von Schnittstellenmodi, von denen jeder einem anderen jeweiligen einen der mehreren Sätze von Signalen entspricht, auslegen soll;
einen Spannungsregler, VR, (112), der an die erste HW-Schnittstelle (106) gekoppelt ist, wobei der VR (112) auf Basis des Speichertyps auf einen ersten VR-Modus von VR-Modi, von denen jeder einer anderen jeweiligen einen der Speichervorrichtungen entspricht, programmiert werden soll und der ersten Schnittstelle auf Basis des ersten VR-Modus eine oder mehrere Spannungen bereitstellen soll; und
eine Zwischenverbindung (108), die in oder auf der PCB (102) angeordnet ist und x Signalleitungen beinhaltet, von denen jede einen jeweiligen Eingangs-/Ausgangs(I/O)-Kontakt der ersten HW-Schnittstelle (106) an einen jeweiligen I/O-Kontakt der zweiten HW-Schnittstelle (104) koppelt, wobei x eine Ganzzahl ist, die gleich einer Gesamtzahl von Signalen eines Supersatzes der mehreren Sätze von Signalen ist,
**dadurch gekennzeichnet, dass**
die Prozessorvorrichtung (120) eine Signal-MUX-Schaltung (122) beinhaltet, um Zuordnungen von I/O-Kontakten zu einem jeweiligen Signal oder einer jeweiligen Spannung einer Schnittstelle an der Verbindung zur HW-Schnittstelle (104) bereitzustellen, wobei die MUX-Schaltung zu verschiedenen Zeiten auf einen beliebigen von verschiedenen Schnittstellenmodi, von denen jeder einer anderen jeweiligen Speichertechnologie entspricht, ausgelegt ist, wo ein Schnittstellenmodus eine jeweilige Zuordnung bereitstellt, um der entsprechenden Speichertechnologie Rechnung zu tragen.

2. System (100) nach Anspruch 1, wobei die mehreren Sätze von Signalen jeweils durch einen anderen jeweiligen einen von mehreren Speicherstandards spezifiziert sind.

3. System (100) nach Anspruch 2, wobei die mehreren Speicherstandards einen oder mehrere Dualdatenratenspeicherstandards beinhalten.

4. System (100) nach Anspruch 3, wobei die Prozessorvorrichtung (120) einen Eingabe-/Ausgabebasissystem(BIOS)-Prozess, der eine Zustandsmaschinenlogik beinhaltet, ausführt.

5. System (100) nach einem der Ansprüche 1, 2 und 4, wobei die mehreren Speichervorrichtungen (130-136) ein oder mehrere Dualinlinespeichermodule beinhalten.

6. System (100) nach einem der Ansprüche 1 und 2, das ferner eine Detektorlogik (210) umfasst, die in oder auf der PCB (102) angeordnet ist, wobei die Detektorlogik ein Signal, das die Konnektivität der Speichervorrichtung zur ersten HW-Schnittstelle (206) anzeigt, erzeugen und an die Prozessorvorrichtung (220) senden soll.

7. System (100) nach Anspruch 6, wobei die Detektorlogik (210) auf einem seriellen Anwesenheitsdetektionsstandard basiert.

8. System (100) nach Anspruch 6, wobei die Zustandsmaschinenlogik in Reaktion auf das Signal, das die Konnektivität der Speichervorrichtung zur ersten HW-Schnittstelle (106) anzeigt, den Speichertyp der Speichervorrichtung identifiziert.

9. System (100) nach Anspruch 4, wobei die Zustandsmaschinenlogik eine Zustandsmaschinenschaltung der Prozessorvorrichtung (120) umfasst.

10. Verfahren (300) zum Erleichtern des Betriebs eines Prozessors mit einer beliebigen von mehreren Speichervorrichtungen, von denen jede einem anderen jeweiligen Satz von Signalen entspricht, wobei das Verfahren Folgendes umfasst:
Detektieren einer Konnektivität einer Speichervorrichtung zu einer ersten Hardwareschnittstelle, die in oder auf einer Leiterplatte (PCB) (310) angeordnet ist;
Identifizieren eines Speichertyps der Speichervorrichtung in Reaktion auf das Detektieren der Konnektivität, wobei eine Prozessorvorrichtung (120) auf Basis des Speichertyps einen ersten Schnittstellenmodus von mehreren Schnittstellenmodi der Prozessorvorrichtung auslegt, wobei die mehreren Schnittstellenmodi jeweils einem anderen jeweiligen Satz von Signalen von mehreren Sätzen von Signalen entsprechen, wobei die Prozessorvorrichtung via eine zweite Hardwareschnittstelle, die in oder auf der PCB (320) angeordnet ist, an die PCB gekoppelt ist;
Programmieren eines ersten Spannungsregler(VR)-Modus von mehreren VR-Modi eines VR auf Basis des Speichertyps, wobei die mehreren VR-Modi jeweils einem anderen jeweiligen einen von mehreren Speichertypen entsprechen, wobei der VR der ersten Schnittstelle auf Basis des ersten VR-Modus (330) eine oder mehrere Spannungen bereitstellt; und
Austauschen von Signalen zwischen der Speichervorrichtung und der Prozessorvorrichtung via x Signalleitungen einer Zwischenverbindung, die in oder auf der PCB angeordnet ist, während des Betriebs der Speichervorrichtung auf Basis der einen oder mehreren Spannungen, wobei x eine Ganzzahl ist, die gleich einer Gesamtzahl von Signalen eines Supersatzes der mehreren Sätze von Signalen ist, **dadurch gekennzeichnet, dass** die Prozessorvorrichtung (120) eine Signal-MUX-Schaltung (122) beinhaltet, um Zuordnungen von I/O-Kontakten zu einem jeweiligen Signal oder einer jeweiligen Spannung einer Schnittstelle an der Verbindung zur HW-Schnittstelle (104) bereitzustellen, wobei die MUX-Schaltung zu verschiedenen Zeiten auf einen beliebigen von verschiedenen Schnittstellenmodi, von denen jeder einer anderen jeweiligen Speichertechnologie entspricht, ausgelegt ist, wo ein Schnittstellenmodus eine jeweilige Zuordnung bereitstellt, um der entsprechenden Speichertechnologie Rechnung zu tragen.

11. Verfahren (300) nach Anspruch 10, wobei die mehreren Sätze von Signalen jeweils durch einen anderen jeweiligen einen von mehreren Speicherstandards spezifiziert sind.

## Revendications

1. Système (100) configuré pour faciliter le fonctionnement d'un processeur avec l'un quelconque parmi de multiples dispositifs de mémoire correspondant chacun à un ensemble respectif différent de signais, le système (100) comprenant :
une carte de circuit imprimé, PCB, (102) ;
une première interface matérielle, HW, (106) placée dans ou sur la PCB (102), la première interface HW (106) étant destinée à se coupler à l'un quelconque parmi des dispositifs de mémoire (130) correspondant chacun à un ensemble respectif différent de signaux parmi de multiples ensembles de signaux ;
une deuxième interface HW (104) placée dans ou sur la PCB (102) ;
un dispositif processeur (120) couplé à la PCB (102) par le biais de la deuxième interface HW (104), le dispositif processeur (120) étant destiné à détecter une connectivité d'un dispositif de mémoire (130-136) avec la première interface HW (106) et à configurer, sur la base d'un type de mémoire du dispositif de mémoire, un premier mode d'interface parmi des modes d'interface correspondant chacun à un ensemble respectif différent de signaux parmi les multiples ensembles de signaux ;
un régulateur de tension, VR, (112) couplé à la première interface HW (106), le VR (112) étant destiné à être programmé, sur la base du type de mémoire, sur un premier mode de VR parmi des modes de VR correspondant chacun à un dispositif de mémoire respectif différent parmi les dispositifs de mémoire, et à fournir une ou plusieurs tensions à la première interface sur la base du premier mode de VR ; et
une interconnexion (108), placée dans ou sur la PCB (102), comportant x lignes de signaux couplant chacune un contact d'entrée/sortie, I/O, respectif de la première interface HW (106) à un contact I/O respectif de la deuxième interface HW (104), x étant un entier égal à un nombre total de signaux d'un surensemble des multiples ensembles de signaux,
**caractérisé en ce que**
le dispositif processeur (120) comporte une circuiterie MUX de signaux (122) destinée à fournir des correspondances de contacts I/O avec un signal respectif ou une tension respective d'une interface au niveau de la connexion avec l'interface HW (104) ; la circuiterie MUX étant configurée, à des instants différents, sur l'un quelconque parmi des modes d'interface différents correspondant chacun à une technologie de mémoire respective différente, un mode d'interface fournissant une correspondance respective permettant la prise en charge de la technologie de mémoire correspondante.

2. Système (100) selon la revendication 1, dans lequel les multiples ensembles de signaux sont chacun spécifiés par une norme de mémoire respective différente parmi de multiples normes de mémoire.

3. Système (100) selon la revendication 2, dans lequel les multiples normes de mémoire comportent une ou plusieurs normes de mémoire à double débit de données.

4. Système (100) selon la revendication 3, dans lequel le dispositif processeur (120) exécute un processus de type système élémentaire d'entrée/sortie, BIOS, comportant une logique de machine à états.

5. Système (100) selon l'une quelconque des revendications 1, 2 et 4, dans lequel les multiples dispositifs de mémoire (130-136) comportent un ou plusieurs modules de mémoire à double rangée de connexions.

6. Système (100) selon l'une quelconque des revendications 1 et 2, comprenant en outre une logique de détecteur (210) placée dans ou sur la PCB (102), la logique de détecteur étant destinée à générer et envoyer au dispositif processeur (220) un signal indiquant la connectivité du dispositif de mémoire avec la première interface HW (206).

7. Système (100) selon la revendication 6, dans lequel la logique de détecteur (210) est basée sur une norme de détection de présence série.

8. Système (100) selon la revendication 6, dans lequel la logique de machine à états identifie le type de mémoire du dispositif de mémoire en réponse au signal indiquant la connectivité du dispositif de mémoire avec la première interface HW (106).

9. Système (100) selon la revendication 4, dans lequel la logique de machine à états comprend une circuiterie de machine à états du dispositif processeur (120) .

10. Procédé (300) de facilitation du fonctionnement d'un processeur avec l'un quelconque parmi de multiples dispositifs de mémoire correspondant chacun à un ensemble respectif différent de signais, le procédé comprenant :
la détection d'une connectivité d'un dispositif de mémoire avec une première interface matérielle placée dans ou sur une carte de circuit imprimé (PCB) (310) ;
en réponse à la détection de la connectivité, l'identification d'un type de mémoire du dispositif de mémoire, un dispositif processeur (120) configurant, sur la base du type de mémoire, un premier mode d'interface parmi de multiples modes d'interface du dispositif processeur, les multiples modes d'interface correspondant chacun à un ensemble respectif différent de signaux parmi de multiples ensembles de signaux, le dispositif processeur étant couplé à la PCB par le biais d'une deuxième interface matérielle placée dans ou sur la PCB (320) ;
sur la base du type de mémoire, la programmation d'un premier mode de régulateur de tension (VR) parmi de multiples modes de VR d'un VR, les multiples modes de VR correspondant chacun à un type de mémoire respectif différent parmi de multiples types de mémoire, le VR fournissant une ou plusieurs tensions à la première interface sur la base du premier mode de VR (330) ; et
au cours du fonctionnement du dispositif de mémoire sur la base des une ou plusieurs tensions, l'échange de signaux entre le dispositif de mémoire et le dispositif processeur par le biais de x lignes de signaux d'une interconnexion placée dans ou sur la PCB, x étant un entier égal à un nombre total de signaux d'un surensemble des multiples ensembles de signaux,
**caractérisé en ce que**
le dispositif processeur (120) comporte une circuiterie MUX de signaux (122) destinée à fournir des correspondances de contacts I/O avec un signal respectif ou une tension respective d'une interface au niveau de la connexion avec l'interface HW (104) ; la circuiterie MUX étant configurée, à des instants différents, sur l'un quelconque parmi des modes d'interface différents correspondant chacun à une technologie de mémoire respective différente, un mode d'interface fournissant une correspondance respective permettant la prise en charge de la technologie de mémoire correspondante.

11. Procédé (300) selon la revendication 10, dans lequel les multiples ensembles de signaux sont chacun spécifiés par une norme de mémoire respective différente parmi de multiples normes de mémoire.
